Europäisches Patentamt

European Patent Office

Office européen des brevets

(11) Publication number: **0 537 362 A1**

# EUROPEAN PATENT APPLICATION
## published in accordance with Art. 158(3) EPC

㉑ Application number: 92907986.1

㉒ Date of filing: **01.04.92**

⑧⑥ International application number:
**PCT/JP92/00419**

⑧⑦ International publication number:
**WO 92/17815 (15.10.92 92/26)**

(51) Int. Cl.⁵: **G03B 17/24**

㉚ Priority: **02.04.91 JP 69980/91**
**25.04.91 JP 95685/91**
**25.04.91 JP 95686/91**
**25.04.91 JP 95705/91**
**25.04.91 JP 95706/91**
**10.12.91 JP 326000/91**

㊸ Date of publication of application:
**21.04.93 Bulletin 93/16**

㊴ Designated Contracting States:
**CH DE FR GB LI NL**

㉛ Applicant: **SEIKO EPSON CORPORATION**
**4-1, Nishishinjuku 2-chome**
**Shinjuku-ku Tokyo 163(JP)**

㉜ Inventor: **YAMADA, Haruyoshi**

**3-5, Owa 3-chome**
**Suwa-shi Nagano-ken 392(JP)**
Inventor: **KOBAYASHI, Hiroshi**
**3-5, Owa 3-chome**
**Suwa-shi Nagano-ken 392(JP)**
Inventor: **OZAWA, Masaki**
**3-5, Owa 3-chome**
**Suwa-shi Nagano-ken 392(JP)**
Inventor: **TANAKA, Seiji**
**3-5, Owa 3-chome**
**Suwa-shi Nagano-ken 392(JP)**

㊹ Representative: **Blumbach Weser Bergen**
**Kramer Zwirner Hoffmann Patentanwälte**
**Radeckestrasse 43**
**W-8000 München 60 (DE)**

(54) **DATA COPY-IN UNIT AND CAMERA THAT DOES NOT REQUIRE RENEWAL OF FILM.**

㊼ A data copy-in unit (40) consists of a lower frame (50) and an upper frame (60) that are assembled as a unitary structure by the engagement of pawls. Shafts (71, 81) of a year-month data display wheel (70) and a day-data display wheel (80) are inserted from the outer side of the upper frame (60). From the outer side of the lower frame (50), copy-in data plates (75, 85) are secured by forcibly inserting flanged pins (78, 88) into the ends of the shafts (71, 81). Space within the lower frame (50) and the upper frame (60) contains a light-emitting diode (91) and a reflector (96) that reflects light beam from the diode and projects it onto the back surface of the film via light-transmission holes (53a, 53b). On the data plate (75) is formed a light-transmitting year-month data portion and on the data plate (85) is formed a light-transmitting day-data portion. The year-month data display wheel (70) and the data plate (75) can be replaced, and the data plate can be easily attached and detached, too, without separating the costly assembled unit.

FIG. 4

## FIELD OF THE INVENTION

The present invention relates to data print units that print such data as the year, month and day on photographic film, and more particularly it relates to simple, inexpensive, compact data print units applicable to simple nonremovable-film cameras generally referred to as throw-away cameras or one-time-use cameras.

## BACKGROUND OF THE INVENTION

Nonremovable-film cameras, generally referred to as throw-away cameras or one-time-use cameras, comprise one roll of film already loaded in the case, a simple manual film advance mechanism, a simple manual shutter mechanism and a photo lens and do not have a film exchange mechanism that can be easily operated by the user himself.

Therefore, their configuration allows only the prescribed number of photographs for the photographic film and does not allow the user himself to replace the photographic film. These nonremovable-film cameras can be purchased inexpensively for a price only slightly higher than the single-unit price of the photographic film. For this reason, they can be referred to as "lens-equipped film." This makes them easy to use when you do not have your own camera on trips or at events.

Some of these nonremovable-film cameras are equipped with a flash device as in regular cameras, but there are none with a data print device that prints data such as the year, month and day on the film.

There is a limit to the number of pictures a nonremovable-film camera can take, and the period during which they can be used is also limited, but there is a strong demand to be able to leave data on each photograph to facilitate their arrangement.

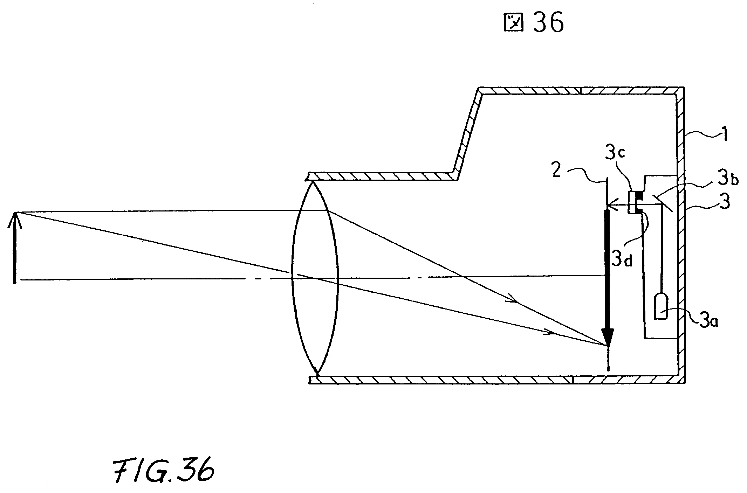

In the prior art, there are many cameras such as 35mm twin lens reflex and single lens reflex cameras that are equipped with a data print device (camera module) for cameras. This data print device for cameras is mounted behind the photographic film 2 inside the back cover 1 of the camera as shown in FIG. 36, for example, and it exposes the year-month-day data number string on the back of the photographic film 2. The data print device comprises a resin case that is approximately 3 cm square and 3 mm thick, a photodiode or tungsten lamp housed inside the resin case as the light source 3a, a reflecting mirror 3b that reflects the light beam, which is emitted from the light source 3a and travels along the surface of the case, at a right angle so that it is deflected in the direction of the thickness of the case, a transmission type liquid crystal display element 3c illuminated by the reflected light, and a shielding plate 3d that restricts the illumination on the display element, whereby the transmitted light formed in the shape of a data number string by the transmission type liquid crystal display element 3c is projected on the rear surface of the photographic film 2 as parallel beams of light. The print data number string is formed by freely changing the multiple-digit number for the year-month-day displayed on the transmission type liquid crystal display element 3c by changing the data signal of the liquid crystal driver by an external operation, and therefore there is no restriction on the year-month-day data that is printed.

It is possible to apply such a data print device (unit module) for cameras to nonremovable-film cameras, but the high cost of the transmission type liquid crystal element 3c, the driver IC and other electronic parts would nullify the low cost advantages of nonremovable-film cameras. Therefore, a data print device that can be practically applied to nonremovable-film cameras must be simple and inexpensive.

Since the function of the transmission type liquid crystal display element 3c is to shape the illumination light into the form of data light and project it, the current inventors realized that a print data plate with translucent year-month-day data sections, for example, could be used instead of this transmission type liquid crystal display element and proposed a configuration in which the appropriate print data number could be selected by manually turning the data plate.

In this case, the restricted surface area naturally limits the number of data in the data sections (year-month-day) that can be displayed on the print data plate, but since there need only be sufficient data for the limited period during which the nonremovable-film camera can be used, it is only necessary to be able to select year-month-day data for a fixed period. However, it is necessary to mount a print data plate with updated data in print devices for differing use periods. Therefore, the print device must have a structure that facilitates attachment and removal of the data plate. However, even if a simple, inexpensive configuration is realized by employing a data print device equipped with a print data plate, the structure of the nonremovable-film camera, which is the main unit, requires that this device have a compact configuration (e.g., approximately 3 cm square and 3 mm thick) as a design condition.

Further, though the prior art data print devices which are mounted in cameras and utilize a transmission type liquid crystal display element allow electronic static operation of data selection, since the print data plate is movable, a configuration must be used that sufficiently considers play, etc., of the print data plate. This is because if the print data plate should rotate eccentrically, have play or become warped, the transmitted light that passes through the data sections will become diffused, resulting in deformation, dropout or fuzziness of the data numbers exposed on the photographic film and thereby degrading exposure quality. In spite of this problem with exposure quality, a data selection mechanism is necessary in the data print devices that use this kind of movable mechanism. That is, the selection of a specific data section requires that the print data plate be rotated to a specific position and that it be held stationary at that position.

For the purpose of realizing a low cost, compact data print device suitable for nonremovable-film cameras, the first objective of the invention is to offer a data print device that facilitates the attachment and removal of the print data plate, the second objective is to realize a structure that prevents eccentric rotation, play or warping of the print data plate, and the third objective is to realize a data selection mechanism suitable to the print unit.

## DISCLOSURE OF THE INVENTION

The principal component parts making up the data print unit of the invention are an upper frame, a lower frame, a light source, an optical means, a print data plate, and a data indicator wheel. The light source is built into an assembled unit in which the upper frame and lower frame are mated together. The optical means projects the light emitted from the light source to the outside via a light transmission hole in the lower frame. The print data plate has multiple translucent type or shielding type data sections at positions equidistant from its rotational center. Further, the data indicator wheel has a flange with data indicator sections corresponding directly or indirectly to the data sections on the print data plate at positions equidistant from its rotational center. The present invention employs such component elements as these, and a sandwich structure is employed as their assembled structure. That is, the data indicator wheel is positioned on the outside surface of the upper frame and can be rotated with respect to the assembled unit, and the print data plate is positioned on the outside surface of the lower frame such that each data section selectively faces the light transmission hole and is fixed to the data indicator wheel such that it can be removed and attached. As a specific mode of connection of the print data plate to the data indicator wheel, the data indicator wheel structure includes an axial member that passes through an axial hole in the assembled unit and the print data plate is fixed to the end of the axial member by means of a flanged pin, etc. The operation that selects data on the print data plate can be performed by manually rotating the data indicator wheel and fine adjusting it to line up the data, but the invention employs a data selection mechanism that reliably rotates and stops the data plate. That is, the data selection mechanism comprises a ratchet gear formed on the back surface of the flange of the data indicator wheel and a damping member that meshes with the ratchet gear formed on the upper frame. Here, it is desirable that an inclined surface be formed on either the ratchet gear or the damping member such that it moves the upper frame and data indicator wheel to a meshed condition at the same time they are assembled. Further, it is desirable that the data indicator wheel have a groove on its inner circumference between the axial member and the ratchet gear and that the upper frame have a cylindrical member on the edge of the opening of its axial hole that engages with the groove on the inner circumference. It is also desirable that the position where they mesh be near the light transmission hole. The print data plate is not limited to one, and multiple plates may be used. In cases in which the space occupied by the data sections is relatively small, only one print data plate may be necessary, but if different types of data are to be printed, a different data plate for each should be used. However, in cases in which three or more data plates are used, it is difficult to arrange multiple data sections within the single illumination range of one light source. That is because the data indicator wheels have a one-to-one relationship with the data plates and it is necessary to secure sufficient area for the flange member of the data indicator wheels. Actually, the print data plates are made up of a disk-shaped first print data plate and a disk-shaped second print data plate. Also, the data indicator wheels are made up of a first data indicator wheel corresponding to the first print data plate and a second data indicator wheel corresponding to the second print data plate. In this case, it is desirable to position the first print data plate and the second print data plate so parts of each overlap and to provide a light transmission hole facing the overlapping parts. Further, in a case in which the data sections are translucent, it is desirable that the first light transmission hole facing the data sections of the first print data plate and the second light transmission hole facing the data sections of the second print data plate be used as the light transmission holes and that the first light transmission hole and the second light transmission hole be separated by a shielding partition. In a case such as this in which two data plates are used to print year-month-day data, it is desirable to provide the year-month data on the first print data plate and the day data on the second print data plate. In addition, it is desirable to provide an opaque nondata section on both the first and second print data plates.

In a case in which a data print unit with the sandwich structure described above is applied to a nonremovable-film camera, the camera body has a structure that allows attachment of the data print unit and a data light transmission hole is formed in it, and a mechanical switch is provided that is linked to the exposure action of the shutter blade and closes the illumination control circuit of the light source. It is desirable that the illumination control circuit be a timed feeder circuit that fixes the time power is supplied to the light source by the closing of the mechanical switching means in the data print unit. It is desirable that a battery be provided in the data print unit for supplying power to the light source.

In the configuration that links the print operation to the shutter blade, it is necessary to provide a mechanical switching means in the camera body that detects the movement of the shutter blade. The data print unit is provided with following circuitry while employing the sandwich structure described above in order to avoid as much as possible any increase in the number of parts or design changes in the camera body being given a data print function. That is, it is equipped with a manual switching means as the light source illumination control circuit that generates an illumination command signal to control illumination by the light source, a detection means that detects the completion of film advance and generates a detection signal, a means that stores the completed or noncompleted condition of film advance according to the detection signal, a timed feeder circuit that fixes the time period during which power is fed to the light source from the built-in battery at the time the detection signal is generated upon the completion of film advance, and a double-illumination prevention circuit that prevents power from being supplied to the light source when film advance is not completed. Here, the detection means can be a mechanical switching means that is opened and closed by a spring member that enters the perforations and moves up and down with the advance of the photographic film. When employing a data print unit with this configuration, the structure of the camera body need only be provided with a data light transmission hole to facilitate attachment of the data print unit.

In addition to automatic printing linked to the action of the shutter blade or manual printing after completion of film advance, a part of the projected light introduced inside the camera body can be utilized for print timing. That is, the data print unit that utilizes the sandwich structure described above employs a photosensor facing the sensing light transmission member of the lower frame and a timed feeder circuit that fixes the time period during which power is supplied to the light source from the built-in battery at the time the detection signal is generated by the sensor. The structure of the camera body to which the data print unit with the above configuration is applied has a data light transmission hole and a light path that guides part of the projected light to the sensor. A projected light path formed by using the perforation holes in the photographic film or a light transmission hole formed in the back case of the camera body at a position within the angle of view of the photographic film may be used as the light path. Further, the light path can also be a dedicated light path formed outside the area occupied by the photographic film.

As described above, the invention comprises an assembled unit having a first sandwich structure in which the light source and the optical means are sandwiched between the upper frame and lower frame and a structure in which this assembled unit is sandwiched between the data indicator wheel and the print data plate. Therefore, it is extremely easy to assemble and to exchange parts. Particularly since the print data plate is positioned on the outside of the lower frame and the data indicator wheel is positioned on the outside of the upper frame, it is possible to replace the print data plate and the data indicator wheel without disassembling the assembled unit made up of the two frames, thereby facilitating reuse of the relatively expensive assembled unit. The print data plate is configured such that it is fixed directly to the data indicator wheel and does not have a rotation transmission mechanism. Therefore, not only are the number of parts reduced, the occurrence of transmission play when a rotation transmission mechanism is used does not become problem, and the data to be printed can be accurately selected. Further, since a data selection mechanism made up of a ratchet gear and damping member is used, it is possible to manually rotate and stop the data indicator wheel accurately in equal degree intervals and always line up the data sections and light transmission hole. Therefore, there is no deformation or dropout of the printed data and the quality of the data exposure can be improved though data printing is performed by manual operation. When an inclined surface is formed on either the ratchet gear or the damping member such that it moves these parts to a meshed condition when the upper frame and data indicator wheel are assembled, the ratchet gear and damping member are guided by the inclined surface in the assembly operation and mesh themselves, thus eliminating the need for a special operation to cause the two to mesh. Since a groove is formed on the inside circumference of the data indicator wheel and a cylindrical member that engages this inside groove is formed on the upper frame, the length of bearing support is the same as the depth of the inside groove. This helps inhibit play between the axial member and the axial hole and makes it possible to suppress play in the data sections of the print data wheel, thereby improving print quality. Further, when those parts of the ratchet gear and damping member that mesh are near the light transmission hole, shift, etc., of the data section to be printed is affected little by mesh play, thus making it possible to suppress deformation of the printed data.

When two print data plates are used, the year-month-day data sections can be affixed to the two data plates while realizing a compact configuration suitable for attachment to a nonremovable-film camera. In this case, the year-month data sections can be affixed to one print data plate and the day data sections can be affixed to the other print data plate, and any year-month-day data can be updated by changing only the data plate with the year-month data sections and its indicator wheel.

By positioning the first print data plate and second print data plate so that they partially overlap, the printing of light other than that transmitted by the data sections can be prevented. Further, when the first light transmission hole and second light transmission hole are separated by a shielding partition, any light other than that transmitted by the data sections can be shielded by the shielding partition. Also, when a nondata section is formed in the data plate, photographs can be obtained with no printed data. In the case of a configuration having a mechanical switching means that closes the illumination control circuit for the light source in conjunction with the exposure operation of the shutter of the camera body, data can be automatically printed by the photographic operation.

Also, in a configuration equipped with a timed feeder circuit that fixes the time period during which power is fed to the light source in the data print unit according to the closing of the mechanical switching means, data exposure is achieved for a fixed period of time regardless of the speed with which the shutter moves up and deviations in print quality (amount of exposure) with each photograph taken can be eliminated. Further, when there is a power supply battery for the light source in the assembled data print unit, it is possible to perform a print test in advance using only the data print unit, thus contributing to reliability testing.

When the manual switching means is not operated in a configuration that is equipped with a manual switching means as the light source illumination control circuit that generates an illumination instruction signal to control illumination by the light source, a detection means that detects the completion of film advance and generates a detection signal, a means that stores the completed or noncompleted condition of film advance according to the detection signal, a timed feeder circuit that fixes the time period during which power is fed to the light source from the built-in battery at the time the detection signal is generated upon the completion of film advance, and a double illumination prevention circuit that prevents power from being supplied to the light source when film advance is not completed, the data printing operation is not executed. This does not require that the nondata section of the data plate be selected on the data indicator wheel when the printing of data is not performed. Also, since data are not printed when film advance has not been completed, double printing can be prevented.

When a configuration is employed having a photosensor facing the sensing light transmission member of the lower frame and a timed feeder circuit that fixes the time period during which power is supplied to the light source from the built-in battery at the time the detection signal is generated by the sensor, the configuration of the light source illumination control circuit can be simplified. Particularly when a projected light path formed in the camera body by utilizing the perforations in the photographic film is used as the light path that guides part of the projected light to the sensor, the amount of light received by the sensor is relatively great and design changes in the camera body can be minimized.

As explained above, the invention comprises a light source housed in the space inside the assembled unit formed by mating the upper frame and lower frame, an optical means that projects the light beam emitted from the light source to the outside via the light transmission hole in the lower frame, a print data plate with multiple translucent and shielding type data sections at positions equidistant from its rotational center, and a data indicator wheel with a flange to which data indicator sections are affixed corresponding directly or indirectly to the data sections on the print data plate at positions equidistant from its rotational center, wherein the data indicator wheel is positioned on the outside surface of the upper frame and can be rotated with respect to the assembled unit, the print data plate is positioned on the outside surface of the lower frame such that each data section selectively faces the light transmission hole and is fixed to the data indicator wheel such that it can be removed and attached, and a first sandwich structure in which the light source and the optical means are sandwiched between the upper frame and lower frame of the assembled unit and a structure in which this assembled unit is sandwiched between the data indicator wheel and the print data plate are used. This configuration offers the following advantages.

(1) Assembly and replacement of parts can be performed easily. It is particularly easy to replace the print data plate and the data indicator wheel without disassembling the assembled unit, thus making it possible to reuse the assembled unit. Further, since no special rotation transmission mechanism is used, not only can the number of parts be reduced, but transmission play does not become a problem and the data to be printed can be accurately selected.

(2) Since a data selection mechanism made up of a ratchet gear and damping member is used, it is possible to manually rotate and stop the data indicator wheel accurately in equal degree intervals and always line up the data sections and light transmission hole. Therefore, there is no dropout of the printed data and the quality of the data exposure can be improved though data printing is performed by manual operation.

(3) Since a groove is formed on the inside circumference of the data indicator wheel and a cylindrical member that engages this inside groove is formed on the upper frame, the length of bearing support is the same as the depth of the inside groove. This helps inhibit play between the axial member and the axial hole and makes it possible to suppress play in the data sections of the print data wheel, thereby improving print quality.

(4) Further, when those parts of the ratchet gear and damping member that mesh are near the light transmission hole, shift, etc., of the data section to be printed is affected little by mesh play, thus making it possible to suppress deformation of the printed data. Here, when an inclined surface is formed on either the ratchet gear or the damping member such that it moves these parts to a meshed condition when the upper frame and data indicator wheel are assembled, the ratchet gear and damping member are guided by the inclined surface in the assembly operation and mesh themselves, thus eliminating the need for a special operation to cause the two to mesh.

(5) When two print data plates are used, the year-month-day data sections can be affixed to the two data plates while realizing a compact configuration suitable for attachment to a nonremovable-film camera. In this case, the year-month data sections can be affixed to one print data plate and the day data sections can be affixed to the other print data plate, and any year-month-day data can be updated by changing only the data plate with the year-month data sections.

(6) By positioning the first print data plate and second print data plate so that they partially overlap, the printing of light other than that transmitted by the data sections can be prevented.

(7) Further, when the first light transmission hole and second light transmission hole are separated by a shielding partition, any light other than that transmitted by the data sections can be blocked by the shielding partition.

(8) Also, when a nondata section is formed in the data plate, photographs can be obtained with no printed data.

(9) In the case of a configuration having a mechanical switching means that closes the illumination control circuit of the light source in conjunction with the exposure operation of the shutter of the camera body, data can be automatically printed. Also, in a configuration equipped with a timed feeder circuit that fixes the time period during which power is fed to the light source according to the closing of the mechanical switching means in the data print unit, data exposure is achieved for a fixed period of time regardless of the speed with which the shutter moves up and deviations in print quality with each photograph taken can be eliminated. Further, when there is a power supply battery for the light source in the data print unit, it is possible to perform a print test in advance using only the data print unit.

(10) When the manual switching means is not operated in a configuration that is equipped with a manual switching means as the light source illumination control circuit that generates an illumination instruction signal to control illumination by the light source, a detection means that detects the completion of film advance and generates a detection signal, a means that stores the completed or noncompleted condition of film advance according to the detection signal, a timed feeder circuit that fixes the time period during which power is fed to the light source from the built-in battery at the time the detection signal is generated upon the completion of film advance, and a double illumination prevention circuit that prevents power from being supplied to the light source when film advance is not completed, the data printing operation is not executed. This means that the data indicator wheel need not be turned when the printing of data is not performed. Also, since data are not printed when film advance has not been completed, double printing can be prevented.

(11) When a configuration is employed having a photosensor facing the sensing light transmission member of the lower frame and a timed feeder circuit that fixes the time period during which power is supplied to the light source from the built-in battery at the time the detection signal is generated by the sensor, the configuration of the light source illumination control circuit can be simplified.

(12) Particularly when a projected light path formed in the camera body by utilizing the perforations in the photographic film is used as the light path that guides part of the projected light to the sensor, the amount of light received by the sensor is relatively great and design changes in the camera body can be minimized.

BRIEF EXPLANATION OF THE DRAWINGS

FIG. 1     is a longitudinal sectional side view showing a nonremovable-film camera equipped with the data print unit of the first embodiment of the invention;

FIG. 2     is an exploded perspective view showing the camera body of the same nonremovable-film camera with its front case removed and the data print unit;

FIG. 3     is an exploded perspective view showing the same data print unit as seen from the top frame;

FIG. 4     is an exploded perspective view showing the same data print unit as seen from the bottom frame;

FIG. 5     is a plane view showing the same data print unit as seen from the upper frame;

FIG. 6     is a cut plane view showing the cut plane along line A-A in FIG. 5;

FIG. 7     is a cut plane view showing the cut plane along line B-B in FIG. 5;

FIG. 8     is a plane view showing the two data indicator wheels in the same data print unit;

FIG. 9     is a plane view showing the two print data plates in the same data print unit;

FIG. 10    (A) is a plane view showing the meshed relationship between the damping member and gear in the same data print unit, and FIG. 10 (B) is cross section showing the meshed condition between the damping member and gear in the same data print unit;

FIG. 11    is a plane view showing the switch unit of the same embodiment;

FIG. 12    is a cut plane view showing the cut plane along line C-C in FIG. 11;

FIG. 13    is a plane view showing the attached condition of the same switch unit;

FIG. 14    is an electronic circuit diagram showing the light source illumination control circuit of the same embodiment;

FIG. 15    is an exploded perspective view showing the camera body of a nonremovable-film camera with its front case removed and equipped with the data print unit of the second embodiment of the invention, the data print unit and the switch unit;

FIG. 16    is a plane view showing the attached condition of the same switch unit;

FIG. 17    is a plane view showing the same data print unit as seen from the upper frame;

FIG. 18    is a cross section showing the attached condition of the switch plate in the same switch unit;

FIG. 19    is an electronic circuit diagram showing the light source illumination control circuit in the same embodiment;

FIG. 20    is timing chart for explaining the operation of the same light source illumination control circuit;

FIG. 21    is an exploded perspective view showing the camera body of a nonremovable-film camera with its front case removed and equipped with the data print unit of the third embodiment of the invention and the data print unit;

FIG. 22    is a plane view showing the same data print unit as seen from the upper frame;

FIG. 23    is a cut plane view showing the cut plane along line D-D in FIG. 22;

FIG. 24    is cross section showing the switching mechanism for detecting film advance in the same data print unit;

FIG. 25    is a cross section showing the attached condition of the switch plate in the same switch unit;

FIG. 26    is an electronic circuit diagram showing the light source illumination control circuit in the same embodiment;

FIG. 27    is a timing chart for explaining the operation of the same light source illumination control circuit;

FIG. 28    is a longitudinal sectional side view showing a nonremovable-film camera equipped with the data print unit of the fourth embodiment of the invention;

FIG. 29    is front view showing the same nonremovable-film camera;

FIG. 30    is an exploded perspective view showing the camera body of the same nonremovable-film camera with its front case removed and the data print unit;

FIG. 31    is a plane view showing the same data print unit as seen from the top frame;

FIG. 32    is a cut plane view showing the cut plane along line E-E in FIG. 31;

FIG. 33    is an electronic circuit diagram showing the light source illumination control circuit of the same embodiment;

FIG. 34    is a timing chart for explaining the operation of the same light source illumination control circuit;

FIG. 35    (A) is a plane view showing a modification of the same embodiment, and FIG. 35 (B) is a plane view showing another modification of the same embodiment; and

FIG. 36    is a longitudinal sectional side view showing a camera equipped with a prior art data print unit with a built-in transmission type liquid crystal display element.

## PREFERRED EMBODIMENTS FOR IMPLEMENTING THE INVENTION

### First Embodiment

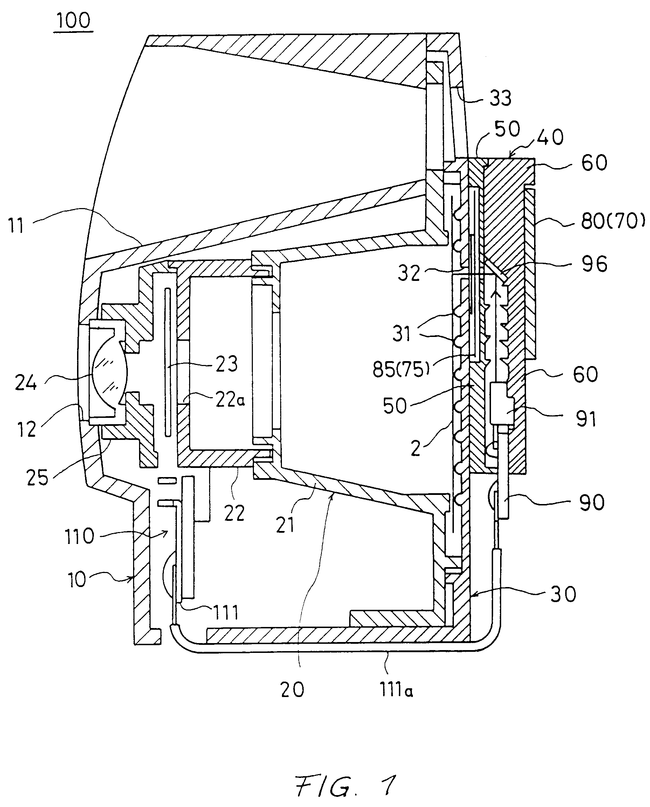

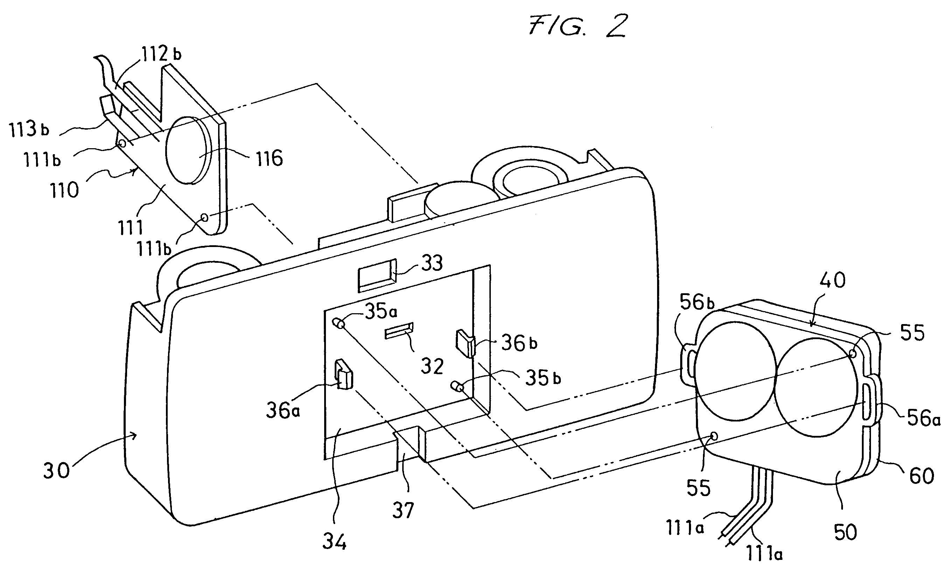

FIG. 1 is a longitudinal sectional side view showing a non removable-film camera equipped with the data print unit of the first embodiment of the invention, and FIG. 2 is an exploded perspective view showing the camera body of the same nonremovable-film camera with its front case removed, the data print unit and the switch unit;

The case structure of this nonremovable-film camera 100 comprises the resin front case 10, the resin middle case 20 and the resin back case 30, all three of which are assembled together into a single unit by being fitted together. The front case 10 is equipped with the finder hole 11, the lens opening 12, etc. The middle case 20 has a light guide cylinder 21 that restricts the projected light path and projects the subject light within a prescribed projection surface size on the photographic film 2. The back case 30 is equipped with multiple protrusions 31 extending in the direction of advance of the photographic film 2, a data light transmission hole 32, a finder window 33, etc. A light guide frame 22 is fixed on the light guide cylinder 21 of the middle case 20 by means of retainer tabs. A shutter blade 23 capable of rotating out is disposed in front of the transmission light hole 22a formed in the light guide frame 22. Also, a lens frame 25 holding a photographic lens 24 is fixed by means of retainer tabs to the light guide frame 22 and in front of the shutter blade 23.

A compact (3 cm square and 3 mm thick) data print unit 40 is attached to the outside of the back case 30 in a manner described below such that it can be attached and removed. As described below, the data print unit 40 is essentially an assembled structure in which the necessary parts are sandwiched between a black resin lower frame (lower case) 50 and a black resin upper frame (upper case) 60, with the data indicator wheels 70 and 80 and the print data plates 75 and 85 attached to the outside surface. The circuit board 90 protruding out from the bottom end of the data print unit 40 and the substrate 111 of the switch unit 110 positioned near the shutter blade 23 are connected by the lead wires 111a and 111a for power supply. This nonremovable-film camera 100 is generally covered by a decorative paper box as an outer case (not shown) with holes in it for the front parts of the photo lens 24 and the finder hole 11 and other important parts.

As shown in FIG. 2, a recessed rectangular unit holding space 34 is formed in the back case 30, and the dowels 35a and 35b are formed at a pair of opposing corners of this unit holding space 34. Also, the retaining tabs 36a and 36b are formed on the right and left sides of the unit holding space 34. Further, a groove 37 for leading out the lead wires 111a and 111a is formed on the bottom edge of the unit holding space 34.

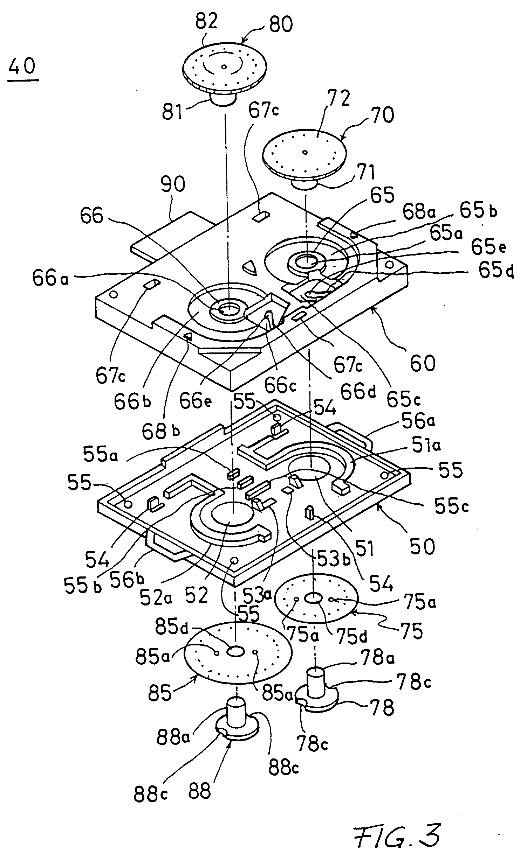

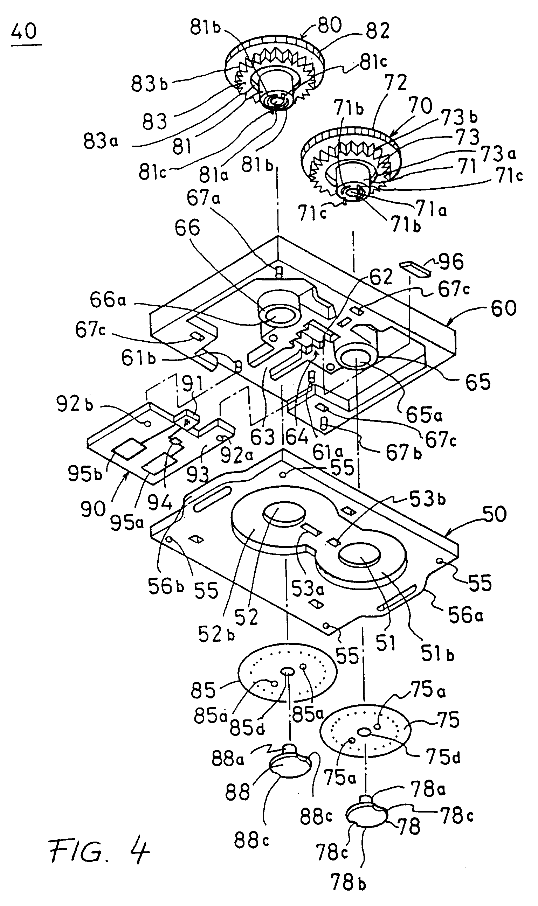

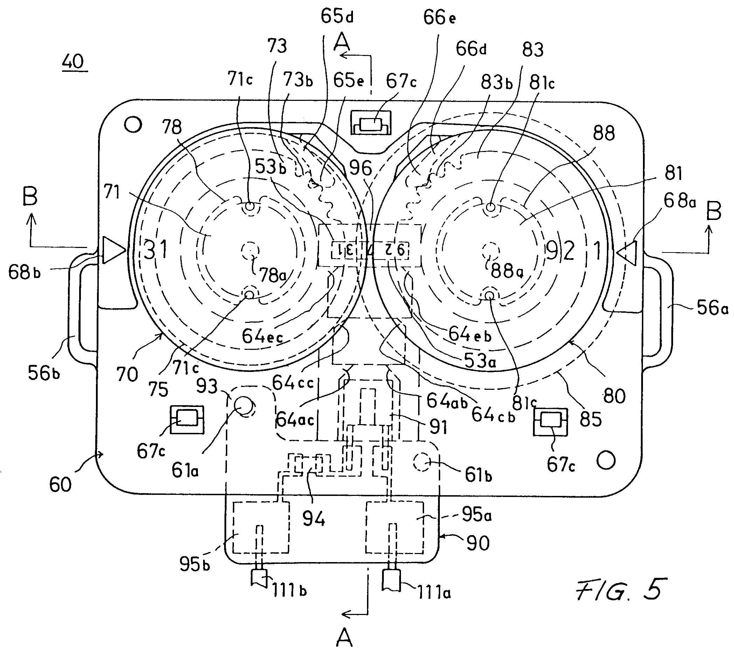

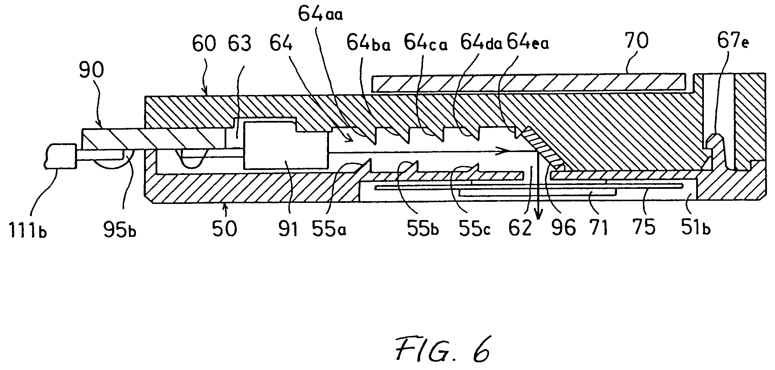

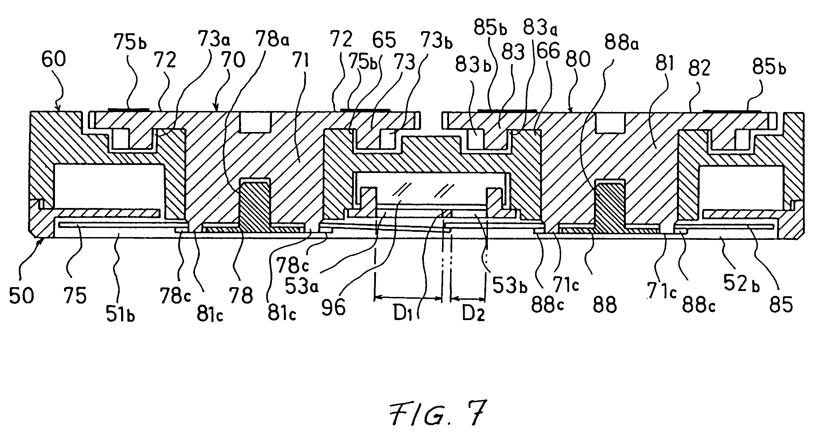

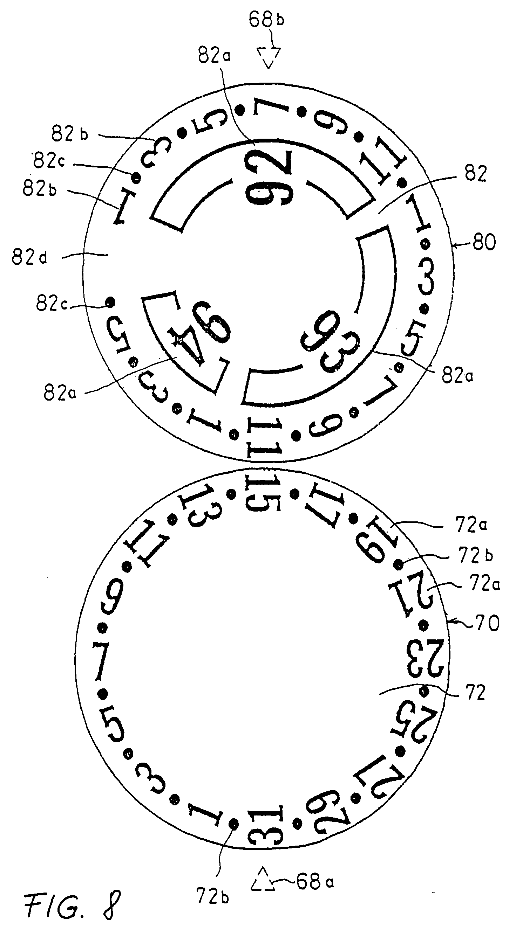

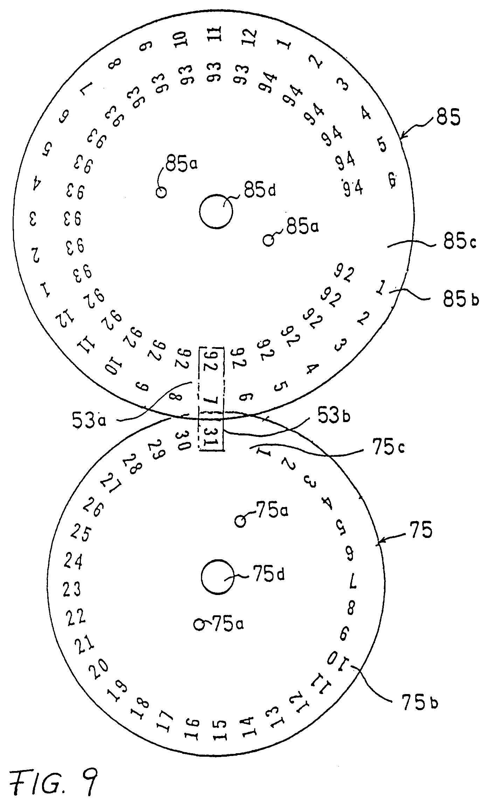

FIG. 3 is an exploded perspective view showing the data print unit of the embodiment as seen from the top frame, FIG. 4 is an exploded perspective view showing the same data print unit as seen from the bottom frame, FIG. 5 is a plane view showing the same data print unit as seen from the upper frame, FIG. 6 is a cut plane view showing the cut plane along line A-A in FIG. 5, FIG. 7 is a cut plane view showing the cut plane along line B-B in FIG. 5, FIG. 8 is a plane view showing the two data indicator wheels in the same data print unit, and FIG. 9 is a plane view showing the two print data plates in the same data print unit.

While the data print unit 40 is an assembled unit that is made one unit by holding the lower frame 50 and the upper frame 60 together with retaining tabs, the data indicator wheels 70 and 80 and the print data plates 75 and 85 are disposed on either side, respectively, and secured in place with flanged pins 78 and 88. As shown in FIG. 4, dowels 61a and 61b are formed on the inside surface of the thin part of the upper frame 60. Dowel holes 92a and 92b are formed on the circuit board 90 on which the light emitting diode 91, which serves as the light source, is formed. Also, the circuit board 90 has a protruding member 93, and a dowel hole 92a is formed in this protruding member 93. A resistor 94 for limiting the current of the light emitting diode 91 is disposed between the external lead terminal 95 of the circuit board 90 and the light emitting diode 91. When the dowel holes 92a and 92b and the dowels 61a and 61b are lined up in their mating position and the circuit board 90 is attached to the upper frame 60, the length of the protruding member 93 functions as a stopper to limit shifting of the circuit board 90 in the direction of thickness, thus facilitating easy assembly as well as preventing undesired movement of the circuit board 90 when soldering the lead wires 111a and 111a to the external lead terminals 95a and 95b of the circuit board 90 and preventing shifting of the set position of the emitting surface of the light emitting diode 91. A pressed lead plate, etc., may be used in instead of the lead wires 111a for the electrical connection between the data print unit 40 and the switch unit 110.

As shown in FIGS. 4 and 6, the reflecting mirror housing 62 is formed nearly in the center inside the upper frame 60, and a reflecting mirror 96, comprising a glass plate on which aluminum has been deposited, is fixed on the approximately 45-degree inclined surface. A structure that prevents irregular reflections is formed, together with the structure of the lower frame 50 described below, in the area from the light source housing 63 to the reflecting mirror housing 62 on the inside of the upper frame 60. This structure for preventing irregular reflection has a nonreflective honed inside surface and a multiple slit structure 64 for attenuating reflected light. The first slit structure in the upper frame 60 comprises the slit limiting projection 64aa, which has a triangular cross section, and the slit limiting projections 64ab and 64ac perpendicular to the left and right of this and which have a triangular cross section, and these are formed on the bottom face toward the light source housing 63. The second slit structure is positioned on the side of the first slit structure toward which the light beam progresses and comprises the slit limiting projection 64ba formed on the bottom face inside the upper frame 60 and which has a triangular cross section. The third slit structure is positioned on the side of the second slit structure toward which the light beam progresses and comprises the slit limiting projection 64ca, which has a triangular cross section, and the slit limiting projections 64cb and 64cc perpendicular to the left and right of this and which have a triangular cross section, and these are formed on the bottom face inside the upper frame 60. The fourth slit structure is positioned on the side of the third slit structure toward which the light beam progresses and comprises the slit limiting projection 64da formed on the bottom face inside the upper frame 60 and which has a triangular cross section. The fifth slit structure is positioned on the side of the fourth slit structure toward which the light beam progresses and comprises the slit limiting projection 64ea, which has a triangular cross section, and the slit limiting projections 64eb and 64ec perpendicular to the left and right of this and which have a triangular cross section, and these are formed on the bottom face inside the upper frame 60.

The cylindrical bearings 65 and 66 formed as the shaft holes 65a and 66a, into which the shafts 71 and 81 of the data indicator wheels 70 and 80 are inserted and are capable of rotating, are formed at nearly symmetrical positions on the left and right sides of the reflecting mirror housing 62. Also, positioning dowels 67a and 67b for attaching the lower frame 50 as described below are provided on a pair of thick corners of the upper frame 60. Further, retaining holes 67c for hooking on the retaining tabs of the lower frame 50 are formed in three locations on the thick parts of the upper frame 60.

As shown in FIG. 3, circular grooves 65b and 66b are formed around the cylindrical bearings 65 and 66 on the outside surface of the upper frame 60. The through holes 65c and 66c are provided in the area between the two circular grooves 65b and 66b, and spring members 65d and 66d protrude out from the side walls of the through holes 65c and 66c as integrated members. The base of the spring members 65d and 66d has elasticity, and their respective ends are provided with humped latches 65e and 66e facing the bearings 65 and 66. Data selection indicator marks 68a and 68b are formed on the thick parts of the short sides of the upper frame 60.

As shown in FIG. 3, the lower frame 50 has circular openings 51 and 52 in which the cylindrical bearings 65 and 66 on the upper frame 60 can fit and data light transmission holes 53a and 53b formed in the area between the two circular opening 51 and 52. The data light transmission holes 53a and 53b are separated by a light-shielding partition 53c. One data light transmission hole 53a transmits the data light for the month and year, while the other data light transmission hole 53b transmits the data light for the day, and the lengthwise dimension of the data light transmission hole 53a is formed longer than that of the data light transmission hole 53b due to the number of data digits. Ribs 51a and 52a in the shape of the number "5" are formed around the outside of both data light transmission holes 53a and 53b. These ribs 51a and 52a prevent stray light from entering the print optical system as well reinforce the unit. Also, as shown in FIGS. 3 and 6, the slit limiting protrusions 55a, 55b and 55c, which make up part of the multiple slit structure 64 described above, are formed in a row with the data light transmission holes 53a and 53b. Three retaining holes 67c are formed in the thick parts of the upper frame 60, and the retaining tabs 54 that engage these are provided on the inside surface of the lower frame 50. The dowel holes 55 in which the dowels 67a and 67b of the upper frame 60 and the dowels 35a and 35b of the camera body fit are formed in the four corners of the lower frame 50. Further, the ear-shaped retainer members 56a and 56b are formed on the outside of the short sides of the lower frame 50, and these hook on the retainer tabs 36a and 36b on the camera body. The data plate housings 51b and 52b, which are the thin parts around the circular openings 51 and 52 are formed on the outside of the lower frame 50. As described below, since the pair of print data plates 75 and 85 are of differing sizes, the data plate housing 52b is formed larger than the other data plate housing 51b.

The data indicator wheel 70 has a shaft 71 that fits in the shaft hole 65a, a circular plate-like flange 72 formed as an integral member on one end and a circular gear (ratchet gear) 73 formed as an integral member on the underside of the flange member 72. Parallel graduation marks are formed on the circumference of the flange 72. As shown in FIG. 8, day indicator sections 72a that indicate the odd numbers from 1 to 31 and the dot indicator sections 72b that indicate dots between the day indicator sections 72a and 72a are formed near the outer edge on the top surface of the flange 72 by a screen printing, offset printing or other technique. These dot indicator sections 72b indicate the even numbers between 1 and 31 and are used to facilitate the listing of the day data in the limited space on the flange 72. Therefore, it is possible to print the data indicator sections 72a with large numbers on the flange 72, which has relatively little surface area, and the resulting improved readability helps to prevent incorrect date alignment. A pin hole 71a with an interference fit to allow the insertion of the pin member 78a of the flanged insertion pin 78 and arc-shaped grooves 71b and 71b surrounding the pin hole 71a are formed on the end surface of the shaft 71 of the data indicator wheel 70. The dowels 71c and 71c for lining up the position for insertion in the dowel holes 75a and 75a of the print data plate 75 are also provided on the end surface of the shaft 71. The diameter out to the ends of the teeth of the circular gear 73 is smaller than that of the flange 72. There is an inner circular groove 73a between the circular gear 73 and the shaft 71. The circular gear 73 fits in the circular groove 65b of the upper frame 60, and the gear teeth 73b engage the humped latch 65e of the spring member 65d.

Similarly, the data indicator wheel 80 has a shaft 81 that fits in the shaft hole 66a, a circular plate-like flange 82 formed as a single unit on one end and a circular gear (ratchet gear) 83 formed as a single unit on the underside of the flange 82. Parallel graduation marks are formed on the circumference of the flange 72. Year indicator sections 82a that indicate the last two digits "92" of the year 1992, the last two digits "93" of the year 1993 and the last two digits "94" of the year 1994 are formed on the inner area of the surface of the flange 82, and a month indicator section 82b that indicates the odd numbers from 1 to 12 outside the year indicator section 82a where "92" is indicated, a month indicator section 82b that indicates the odd numbers from 1 to 12 outside the year indicator section 82a where "93" is indicated and a month indicator section 82b that indicates the numbers "1", "3" and "5" outside the year indicator section 82a where "94" is indicated and dot indicator sections 82c that indicate dots between the month indicator sections 82b and 82b are formed on the top surface of the flange 82 by a screen printing, offset printing or other technique. These dot indicator sections 82c indicate the even numbers and are used to facilitate the listing of the year-month data in the limited space on the flange 82. Therefore, it is possible to print large numbers on the flange 82, which has relatively little surface area, and the resulting improved readability helps to prevent incorrect date alignment. Further, a nondata indicator area 82d at least one pitch wide is provided between the month indicator "1" belonging to the number "92" and the dot indicator belonging to the number "94".

A pin hole 81a with an interference fit to allow the insertion of the pin member 88a of the flanged insertion pin 88 and arc-shaped grooves 81b and 81b surrounding the pin hole 81a are formed on the end surface of the shaft 81 of the data indicator wheel 80. The dowels 81c and 81c for lining up the position for insertion in the dowel holes 85a and 85a of the print data plate 85 are also provided on the end surface of the shaft 81. The diameter out to the ends of the teeth of the circular gear 83 is smaller than that of the flange 82. There is an inner circular groove 83a between the circular gear 83 and the shaft 81. The circular gear 83 fits in the circular groove 66b of the upper frame 60, and the gear teeth 83b engage the humped latch 66e of the spring member 66d.

In this way, a pair of data indicator wheels 70 and 80 indicate the year-month-day data for a 30-month period from January 1, 1992 to June 30, 1994, for example. The reason why a 30-month data indicator is used is as follows. The life of a nonremovable-film camera, the film of which cannot be replaced by the user when it is used up, is approximately two years. Considering the stocking period up until the data print unit is attached to the nonremovable-film camera, the ability to print data for 30 months is sufficient, and there is no need for 5 or 10 years worth of long-term date data. Further, by aligning the dot indicator section 72b between the indicators "31" and "1" on the data indicator wheel 70 with the mark 68a and aligning the nondata indicator area 82d on the data indicator wheel 80 with the mark 68b, the data print unit can be set to a condition in which data are not printed. By setting the data print unit to this data nonprint condition when it is shipped out, the inadvertent printing of incorrect data by the user after purchase can be prevented.

The print data plates 75 and 85 are, for example, formed by punching out circular negative plates from photographic film that has been exposed with the prescribed data. The print data plate 75 has translucent day data sections 75b formed in the shape of the numbers "1" to "31" around its outer edge, and the remaining area blocks light. Also, a light-blocking nondata area 75c that is at least one pitch wide is left between the data section of the number "31" and the data section of the number "1". A central hole 75d through which the pin member 78a of the flanged insertion pin 78 passes is formed in the center of the print data plate 75, and as described above, two dowel holes 75a are formed. The print data plate 85 is a larger disc than the print data plate 75 and has translucent year-month data sections 85b formed in the shape of the numbers "92 1" to "92 12", the numbers "93 1" to "93 12" and the numbers "94 1" to "94 6" around its outer edge, and the remaining area blocks light. Since the year-month data sections 85b for data related to the year and month are formed on a single print data plate, fewer parts, greater compactness and lower costs can be realized. Further, since only two indicator wheels need to be turned to select three data, operation is simplified. A light-blocking nondata area 85c that is at least one pitch wide is left between the data section of the number "92 1" and the data section of the number "94 6". A central hole 85d through which the pin member 88a of the flanged insertion pin 88 passes is formed in the center of the print data plate 85, and as described above, two dowel holes 85a are formed. The print data plates 75 and 85 with these translucent sections and light-blocking sections can be produced by a photolithography technique, but their production is not limited to this and they can also be produced by a diffusion transfer technique that uses a translucent plastic film and transfers data that has been printed on a printing or photographic paper to the film. They can also be formed by etching or punching out using a metal plate, etc. Further, They can also be produced by a monochrome scanner technique that prints the scanned data by means of a laser beam.

The flanged insertion pin 78 comprises the pin member 78a and the flange 78b joined at one end, and notches 78c are formed on the edge of the flange 78b to allow clearance for the ends of the dowels 71c that pass through the dowel holes 75a. Further the flanged insertion pin 85 comprises the pin member 88a and the flange 88b joined at one end, and notches 88c are formed on the edge of the flange 88b to allow clearance for the ends of the dowels 81c that pass through the dowel holes 85a.

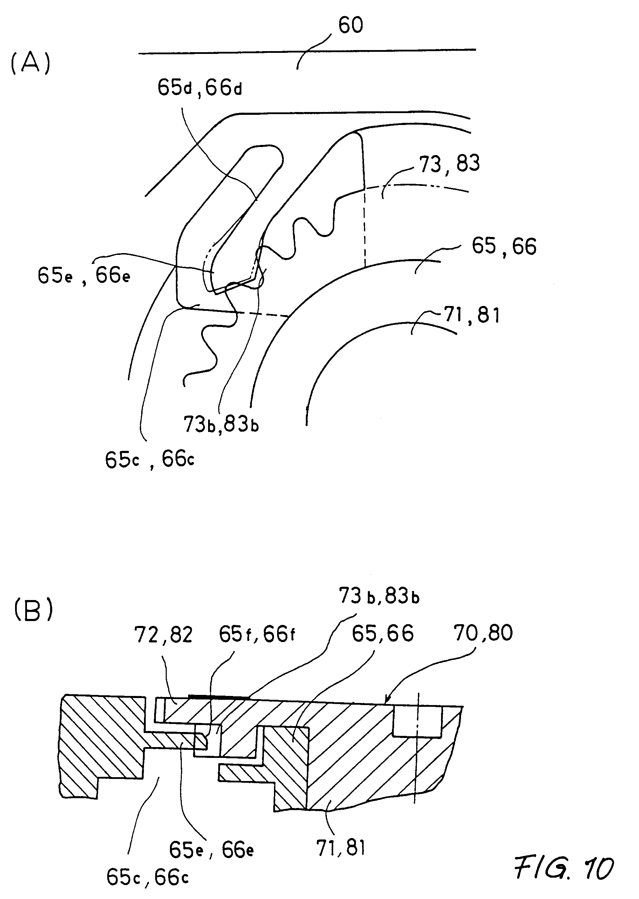

In the assembly of a data print unit 40 with this configuration, first the reflecting mirror 96 and circuit board 90 are inserted in the upper frame 60, the dowel holes 55 and 55 of the lower frame 50 are positioned on the dowels 67a and 67b, and the three retaining tabs 54 are hooked in the retaining holes 67c, whereby the upper frame 60 and lower frame 50 become a single unit. As a result, the reflecting mirror 96 and the circuit board 90 are, of course, secured in placed and the cylindrical bearings 65 and 66 fit in the circular holes 51 and 52. Here, the positioning operation is simplified by the dowels 67a and 67b and the dowel holes 55 and 55. Further, since the three retaining tabs 54 are at positions forming nearly an equilateral triangle on the unit 40, the thin upper frame 60 and lower frame 50 fit together well and bowing, warping, etc., are effectively prevented, thus preventing the internal optical parts from shifting. Next, the shafts 71 and 81 of the data indicator wheels 70 and 80 are inserted in the shaft holes 65a and 66a of the upper frame 60 of the assembled unit of the upper frame 60 and the lower frame 50. In the process of inserting the shafts 71 and 81, the gear teeth 73b and 83b of the circular gears 73 and 83 come in contact with the humped latches 65e and 66e on the spring members 65d and 66d, but since the inclined surfaces 65f and 66f are formed on the part of the humped latches 65e and 66e that comes in contact with the gear teeth 73b and 83b as shown in FIG. 10 (B), the spring members 65d and 66d are flexed back from the position of the solid line to the position of the double-dashed line in FIG. 10 (A) and the humped latches 65e and 66e and the gear teeth 73b and 83b mesh. Therefore, the shafts 71 and 81 need only be inserted in the shaft holes 65a and 66a. As a result of this insertion, the dowels 71c and 81c of the shafts 71 and 81 protrude into the open space of the data plate housings 51b and 52b. Next, the dowel holes 75a and 85a of the data plates 75 and 85 are fitted on the protruding dowels 71c and 81c. Here, the indicator data on the data indicator wheels 70 and 80 correspond to the data on the print data plates 75 and 85. Also, the pin member 78a of the insertion pin 78 is press fitted in the central hole 75d and the pin hole 71a and secured in place, and the pin member 88a of the insertion pin 88 is press fitted in the central hole 85d and the pin hole 81a and secured in place.

As described above, in the assembly method for the data print unit 40, the data indicator wheels 70 and 80, which are shaped somewhat like rivets, are attached from the upper frame 60 side and the data plates 75 and 85 are attached from the lower frame 50 side to the outside of the assembled unit, which houses the optical parts, etc., and comprises the upper frame 60 and the lower frame 50, and the insertion pins 78 and 88 are pressed fitted. Therefore, the assembly operation is extremely efficient. Also, when updating the data plate 85 with 30-month year-month data, the data plate 85 can be easily removed by pulling out the insertion pin 88.

This ease of assembly and replacement are due to the structure of the data indicator wheels 70 and 80. That is, the data indicator wheels 70 and 80 not only have a data indicator function, but they also have the circular gears 73 and 83 as rotational positioning means on the underside of the flange and the dowels 71c and 81c as positioning means for the data plates 75 and 85 on the end of the shafts 71 and 81. Here, as shown in FIG. 7, the diameter out to the ends of the gear teeth on the circular gears 73 and 83 is smaller than that of the flanges 72 and 82. Of course, this facilitates insertion of the display wheels 70 and 80, but the diameter of the circular gears 73 and 83 is closer to the diameter of the flanges 72 and 82 than to the diameter of the shafts 71 and 81. Meshing play unavoidably occurs between the gear teeth 73b and 83b and the humped latches 65e and 66e of the spring members 65d and 66d, and when the diameter out to the ends of the teeth is small, that play is amplified in the data sections 75b and 85b of the data plates 75 and 85, thus resulting in deformation, dropout or fuzziness of the print data numbers. However, since the position of the gear teeth 73b and 83b is near the flanges 72 and 82 in this embodiment, the amplification of mesh play can be suppressed, thus contributing to data exposure quality. Also, circular grooves 65 and 66 are formed on the inside of the circular gears 73 and 83 on the data indicator wheels 70 and 80, and the cylindrical bearings 65 and 66 fit in these. Therefore, the bearing length in the direction of thrust of the bearing is longer by the length of the circular grooves 65b and 66b than if there were no circular grooves 65b and 66b. Since the length of the bearings 65 and 66 in this embodiment is approximately 4 mm and the circular grooves 65b and 66b is approximately 1 mm, the circular groove increases the bearing length by approximately 33 percent. This increase in bearing length has the effect of suppressing play and eccentric rotation of the data indicator wheels 70 and 80 themselves, thus making it possible to suppress deformation, dropout and fuzziness of the print data numbers by this means as well. Further, as shown in FIG. 5, since the spring members 65d and 66d are positioned near the data light transmission holes 53a and 53b in this embodiment, i.e., at mutually opposing positions between the adjacent display wheels 70 and 80, blurring or deformation at those parts of the data plates 75 and 85 facing the data light transmission holes 53a and 53b can be suppressed. If the spring members are located in the corners of the upper frame 60, meshing play between the spring members and the gear teeth is amplified, thus resulting in the generation of deformation or distortion at those parts of the data plates facing the data light transmission holes.

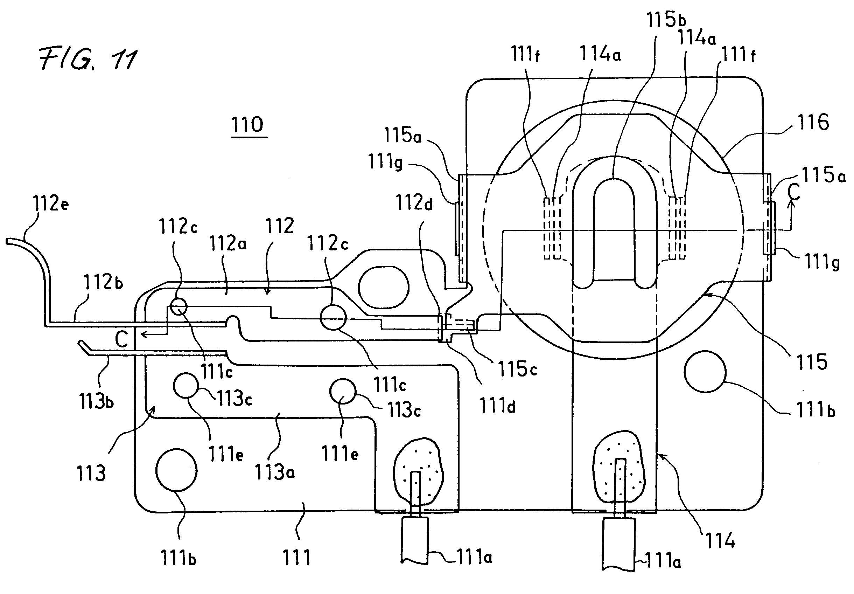

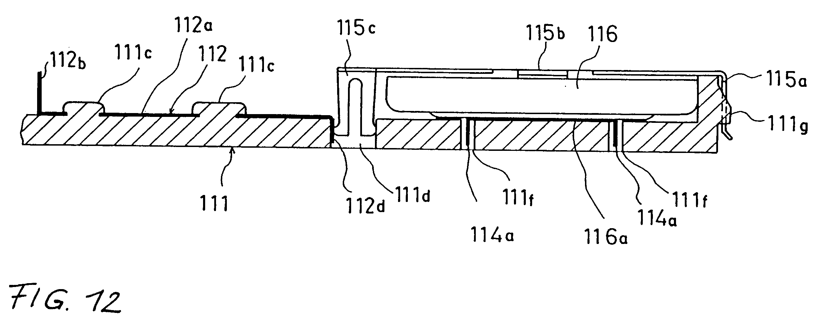

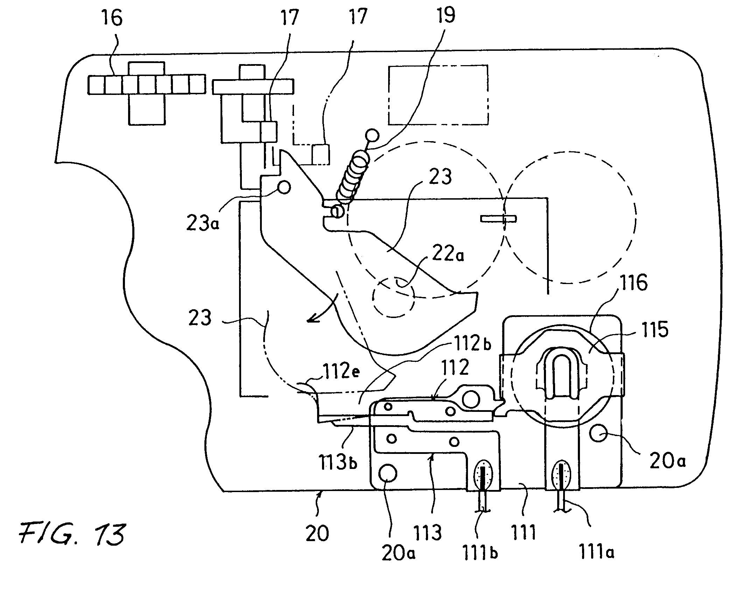

FIG. 11 is a plane view showing the switch unit of this embodiment, FIG. 12 is a cut plane view showing the cut plane along line C-C in FIG. 11, and FIG. 13 is a plane view showing the attached condition of the same switch unit. The switch unit 110 comprises the circuit board 111, the switch plates 112 and 113, the negative terminal plate 114 and the battery presser metal 115. The circuit board 111 is a flat nearly L-shaped insulating substrate with two dowel holes 111b. The switch unit 110 is attached to the camera body by lining up these dowel holes 111b and the dowels 20a formed in the middle case 20. One switch plate 112 has a plate-shaped member 112a attached to the substrate 111 and a contact member 112b extending out from one end. The plate-shaped member 112a has two dowel holes 112c, and the two dowels 111c on the substrate 111 are positioned on these dowel holes 112c and passed through them, whereby the switch plate 112 is secured to the substrate 111. The edge of the plate-shaped member 112a is formed into a bending member 112d, and this engages the inside of the stop hole 111c formed in the substrate 111. The end of the contact member 112b has a curved contact member 112e on which the edge of the shutter blade 23 comes in contact as described below. The other switch plate 113 has a plate-shaped member 113a attached to the substrate 111 and a contact member 113b extending out from one end. Two dowel holes 113c are formed in this plate-shaped member 113a, and the two dowels 111e on the substrate 111 are positioned on these dowel holes 113c and passed through them, whereby the switch plate 113 is secured to the substrate 111. A lead wire 111a is soldered to one end of the plate-shaped member 113a of the switch plate 113. The negative terminal plate 114 has a bending member 114a, and this is inserted in the insertion hole 111f formed in the substrate. A lead wire 111a is soldered to one end of the negative terminal plate 114. The negative electrode 116a of a disc-shaped battery 116 is pressed against the negative terminal plate 114. The positive electrode 116b of the battery 116 is pressed down by the battery presser metal 115. Hooks 115a, which engage the protrusions 111g formed on the substrate, are formed on the battery presser metal 115. Also, a spring member 115b is formed nearly in the center of the battery presser metal 115, and its elastic force presses down on the battery 116. A two-level spring member 115c is formed at one end of the battery presser metal 115, and this is inserted in the stop hole 111c of the substrate. One leg of the two-level spring member 115c is in contact with the bending member 111d of the switch plate 112 with elastic force. Conductive contact is achieved in this two-level spring member 115c between the battery presser metal 115 as the positive electrode and the switch plate 112. In the assembly method of this switch unit 110, first the dowels 111c and 111e of the substrate 111 are lined up with the dowel holes 112c and 113e of the switch plates 112 and 113 and the two are assembled, after which the bending member 114a of the negative terminal plate 114 is inserted in the hole 11f of the substrate. Next, the battery 116 is placed on the negative electrode plate 114, and then the two-level spring member 115c of the battery presser metal 115 is inserted in the stop hole 11d and the hooks 115a are hooked on the protrusions 112g.

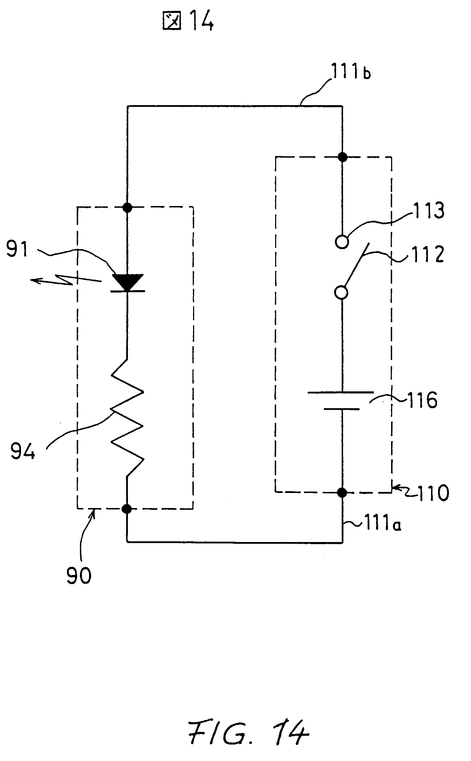

FIG. 14 is an electronic circuit diagram showing the lamp illumination control circuit of the data print unit in this embodiment. The battery 116 and the switch plates 112 and 113 connected in series as a switch to it are disposed in the switch unit 110 mounted in the camera body as described below. Also, a resistor 94 and a light-emitting diode connected in series to it are provided on the circuit board 90 of the data print unit 40 as described above. The switch plate 113 and light-emitting diode 91 are connected by the lead wire 111b, and the negative electrode of the battery 116 and the resistor 94 are connected by the lead wire 111a. In this embodiment, the lead wires 111a and 111b were used, but a lead wire board manufactured by press working may be used instead.

As shown in FIG. 13, nonremovable-film cameras are generally ready to shoot a picture when the film is advanced by turning the film advance knob 16 manually. Here, when the shutter lever 17 is not operated, the shutter blade 23 covers the light hole 22a between the photographic lens 24 and the photographic film 2. When the shutter lever 17 is depressed, the shutter blade 23 swings on the axis 23a from the position indicated by the solid line in FIG. 13 to the position indicated by the double-dashed line and opens the light hole 23a, whereby the subject is exposed on the photographic film 2. The rotation of the shutter blade 23 causes its edge to push down the switch plate 112 via the curved contact member 112e of the switch plate. This causes the contact member 112b of the switch plate 112 and the contact member 113b of the switch plate 113 to come in contact and close the switch, whereby current is supplied from the battery 116 to the light-emitting diode 91 and the light-emitting diode 91 comes on for a fixed period of time. When the depressed shutter lever 17 is released, however, the shutter blade 23 and shutter lever 17 are returned by the force of the return spring 19. Here, the movable contact member 112b of the switch plate 112 is configured such that it comes in contact with the contact member 113 of the switch plate 113 as the shutter blade 23 rotates. That is, the switch plates 112 and 113 serve as both the means for detecting the timing for illuminating the light-emitting diode 91 and as the switch that supplies the current necessary to illuminate it. Therefore, the switch unit 110 can be attached without changing the mechanism design of the body of existing nonremovable-film cameras.

When the light-emitting diode 91 comes on, the emitted light beam passes by the multiple slit structure 64, which has a irregular reflection prevention structure, and arrives at the reflecting mirror 96, where it is reflected in the direction of thickness of the unit. Also, the reflected light beam passes through the data light transmission holes 51a and 51b and illuminates the data sections 75b and 85b of the data plates 75 and 85 facing the holes. The data sections 75b and 85b are translucent, thus causing the illumination light to take on the shapes of the number string of the data sections 75b and 85b, and this projected light beam exposes the data on the rear surface of the photographic film 2. By this means, printing of the data on the photographic film is completed. Here, the data plates 75 and 85 are positioned so that they partially overlap, thus making it possible to block the light that passes by the circumferential member of the data plates 75 and 85 in the vicinity of the data sections 75b and 85b. Further, the data light transmission holes 53a and 53b are separated by the light-shielding partition 53c, and the light-blocking shielding 53c blocks the light that passes by the circumferential member of the data plates 75 and 85 in the vicinity of the data sections 75b and 85b, thus enhancing the light-shielding performance. Therefore, as shown in FIG. 7, the ranges D1 and D2 through which light is passed are limited with respect to the rear surface of the film 2. In this embodiment, the circumferential member of the large-diameter month-year data plate 75 is positioned on the outside and the circumferential member of the small-diameter day data plate 85 is positioned on the inside, thus making it possible to prevent damage or deformation of the data sections 85b due to unintentional bending of the outside circumference of the day data plate 85 when the year-month plate 75 is replaced (updated).

Second Embodiment

Next is an explanation of the second embodiment of the invention.

First, this embodiment has the following features. In the first embodiment, the battery 116 was mounted on the substrate 111 of the switch unit 110, but in this embodiment the battery 116 is mounted in the data printer unit 140. Also, a light source illumination control circuit that keeps the illumination time constant each time data are printed is built into the data print unit 140.

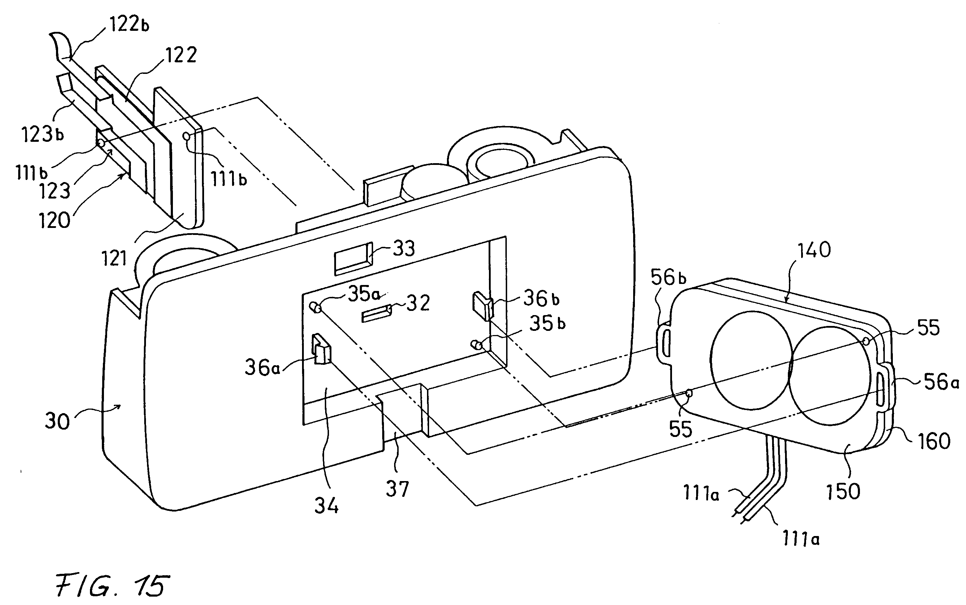

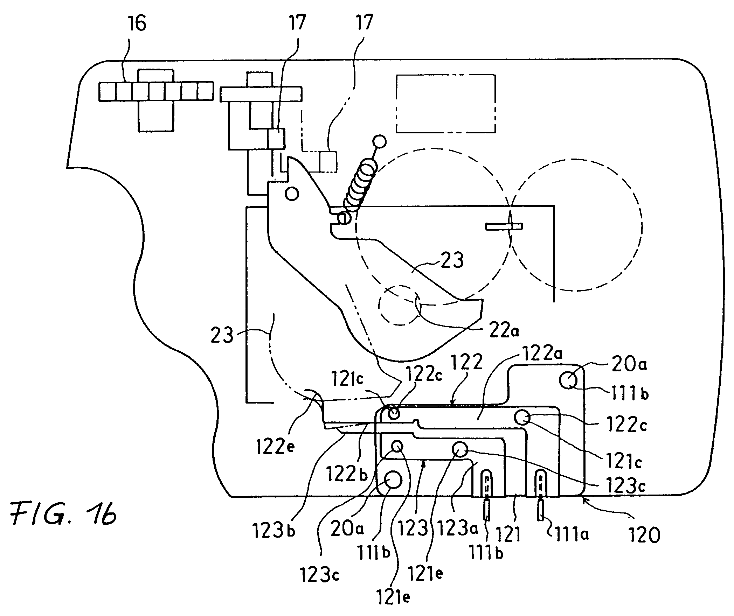

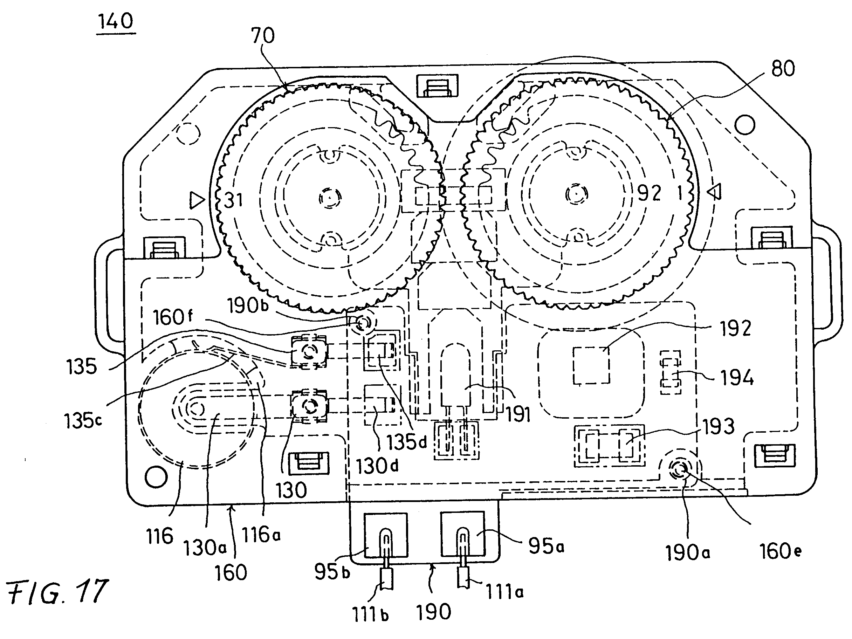

FIG. 15 is an exploded perspective view showing the camera body of the nonremovable-film camera with its front case removed and equipped with the data print unit of the second embodiment of the invention, the data print unit and the switch unit, FIG. 16 is a plane view showing the attached condition of the same switch unit, and FIG. 17 is a plane view showing the same data print unit as seen from the upper frame. In FIGS. 15 to 17, the same components as in the first embodiment are indicated by the same reference numbers, and their explanation is omitted.

The switch unit 120 comprises the substrate 121 and the switch plates 122 and 123. The substrate 121 is a flat, generally L-shaped insulating substrate with two dowel holes 111b. The switch unit 120 is attached to the camera body by lining up these dowel holes 111b and the dowels 20a formed in the middle case. The switch plate 122, however, has a plate-shaped member 122a attached to the substrate 121 and a contact member 122b extending out from one end. Two dowel holes 122c are formed in the plate-shaped member 122a, and the switch plate 122 is fixed to the substrate 121 by lining up the two dowels 121c on the substrate 121 with these dowel holes 122c and passing them through. A lead wire 111a is soldered to one end of the plate-shaped member 122a. The end of the contact member 122b has a curved contact member 122e on which the edge of a shutter blade 23 comes in contact. The other switch plate 123 has a plate-shaped member 123a attached to the substrate 121 and a movable contact member 123b extending out from one end. Two dowel holes 123c are formed in this plate-shaped member 113a, and the two dowels 121e on the substrate 121 are positioned on these dowel holes 123c and passed through them, whereby the switch plate 123 is secured to the substrate 121. A lead wire 111a is soldered to one end of the plate-shaped member 123a of the switch plate 123. As described above, the switch unit 120 in this embodiment has two switch plates 122 and 123, and as in the first embodiment, the contact members 122b and 123b open and close in response to the rotation of the shutter blade 23, but there is no battery.

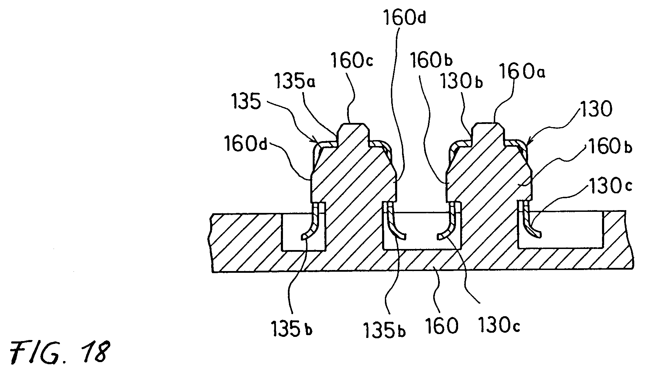

In the structure of the data print unit 140, however, the data indicator wheels 70 and 80, the data plates 75 and 85 and remaining data selection mechanism have the same configuration as in the first embodiment, but the components mounted on the circuit board 190 and the housing structure for the battery 116 are different from the first embodiment. The circuit board 190 is sandwiched between the upper frame 160 and the lower frame 150. The battery 116, the tungsten lamp 191 for use as the light source, the integrated circuit 192, the capacitor 193, the resistor 194 and other components are mounted on this circuit board 190. Copper foil electrodes and a wiring pattern are formed where required on the surface of the circuit board 190. The lamp 191, capacitor 193 and resistor 194 are soldered to the electrodes. The integrated circuit 192 is connected to the circuit board 190 by wire bonding in the case of a bare chip and is soldered in the case of a package IC. The tungsten lamp 191 offers good exposure quality compared to a light-emitting diode since it emits light over the entire wavelength band, but because its brightness fluctuates, the resistance value of the resistor 194 that determines the length of illumination time is ranked, and the illumination time is adjusted by attaching a resistor of a rank corresponding to the brightness of the lamp 191, whereby the amount of light for printing is maintained constant. The dowel holes 190a and 190b are formed in the circuit board 190, and these are positioned on the dowels 160e and 160f on the upper frame and fitted on them. The battery 116 is held in place by the rib 116a formed in the upper frame 160 so that it surrounds the battery 116, the plate spring 130a of the negative electrode plate 130 and the lower frame 150. As shown in FIG. 18, the negative electrode plate 130 has a dowel hole 130b that is positioned on the dowel 160a formed in the upper frame 160, and hooks 130c are formed on both sides of the dowel hole 130b. These hooks 130c engage the protrusions 160a on the upper frame 160. Also, the negative electrode plate 130 has a plate spring 130d that comes into elastic contact with the negative electrode of the circuit board 190. This hook 135b engages the protrusion 160d on the upper frame 160. The positive electrode plate 135 has a plate spring 135c that protrudes out and comes into elastic contact with the side surface of the battery 116, while it also has a plate spring 135d that protrudes out on the other side and comes into elastic contact with the positive electrode of the circuit board 190. Since the battery 116 is built into the data printer unit 140 in this way, the configuration of the switch unit 120 can be simplified, thus saving space on the camera body, and when the data print unit 140 is applied to the camera, the camera body does not require large design changes. Also, by installing the battery 116 in the data printer unit 140, data print tests are possible using only the data print unit 140 as described below.

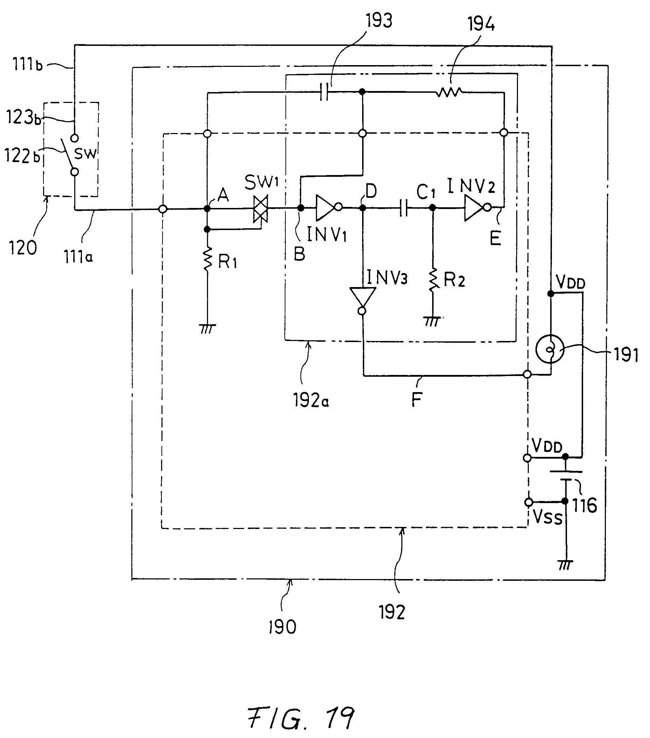

FIG. 19 is an electronic circuit diagram showing the configuration of the light source illumination control circuit of the data print unit of this embodiment. This circuit comprises the shutter switch SW made up of the contact member 122b and the contact member 123b of the switch unit 120, the integrated circuit 192 of the data print unit 190, the resistor 194 and capacitor 193 externally attached to the integrated circuit 192, the tungsten lamp 191 and the battery 116. The integrated circuit 192 has a monostable multivibrator 192a, an analog switch SW1 and a pulldown resistor R1. The monostable multivibrator 192a has inverters INV1 to INV3, a capacitor C1 and a pulldown resistor R2.

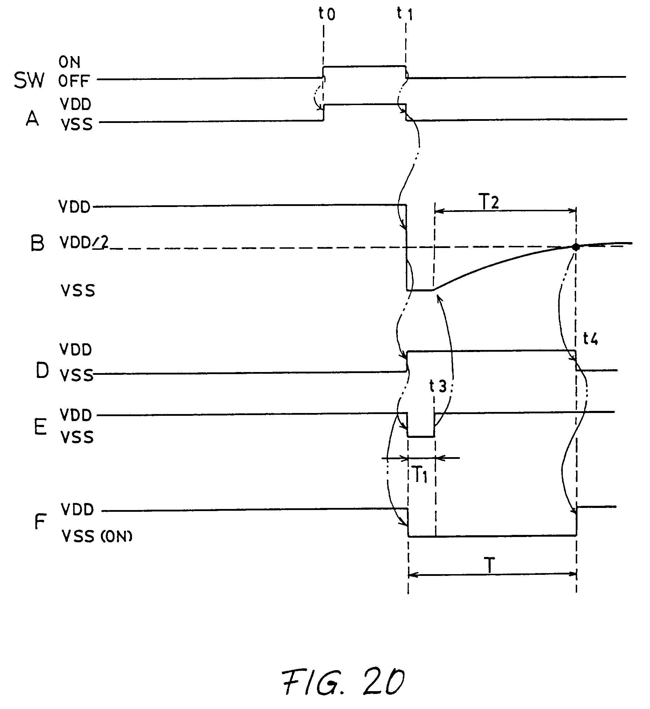

When the shutter switch SW is open (OFF), point A is low level (VSS) and the input of the inverter INV3 is pulled down, and so output E of the inverter INV3 is high level (VDD). Therefore, input B of the inverter INV1 is high level and its output D is low level, and output F of the inverter INV3 is high level. As a result, the externally attached capacitor 193 is charged and the internal capacitor C1 is discharged. Next, when the shutter blade 23 rotates and the shutter switch SW is closed (ON) at time t0, input A of the analog switch SW1 becomes high level, thus causing the analog switch SW1 to close, and both electrodes of the capacitor 193 close and its charge is discharged while input B of the inverter INV1 remains high level. At time t1, the shutter blade 23 resets and the shutter switch SW opens (OFF). Since this causes input A to drop to low level, input B of the inverter INV1 drops to low level because of the zero potential difference between the two electrodes of the capacitor 193 due to the lack of charge. As a result, output D of the inverter INV1 becomes high level and the input of the inverter INV2 also becomes high level because of the zero potential difference between the two electrodes of the capacitor C1 due to the lack of charge, thus causing output E to become low level. Since this causes output F of the inverter INV2 to become low level, the tungsten lamp 191 comes on. However, the capacitor C1 gradually becomes charged, which drops the input level of the inverter INV2, and at time t3, output E is inverted to high level. The time T1 until this inversion is determined by the time constant of the capacitor C1 and the resistor R1. Since the capacitor C1 and resistor R1 are formed as a semiconductor integrated circuit, the time constant is relatively small. When output E of the inverter INV2 becomes high level, charging of the externally attached capacitor 193 begins. In this charging process, input B of the inverter INV1 increases exponentially as shown in FIG. 20, but when input B reaches the threshold voltage (generally VDD/2) of the inverter INV2, output D inverts from high level to low level at time t4. Time T2 until this conversion is determined by the time constant of the resistor 194 and the capacitor 193. As a result, output F of the inverter INV2 becomes high level, thus causing the tungsten lamp 191 to go off. Therefore, the illumination time of the tungsten lamp 191 is the low level time T ( = T1 + T2) of output F, and even if there should be any fluctuation in the ON period of the shutter switch SW, the illumination time can be made constant. Particularly when the shutter switch SW is ON, the analog switch SW1 quickly discharges the capacitor 193 instantaneously, and therefore the capacitor 193 can be reliably set to a no-load condition even if the ON period (t1 - t0) of the shutter switch SW, which is linked to it, is short depending on the way the shutter lever 17 is depressed, thus making it possible to reliably lower the voltage of input B to low level VSS and eliminate deviations in the illumination time.

Third Embodiment

Next is an explanation of the third embodiment of the invention. This embodiment is featured by the absence of a switch unit, a lamp illumination control system that performs the data print operation by manual operation and a double illumination prevention circuit.

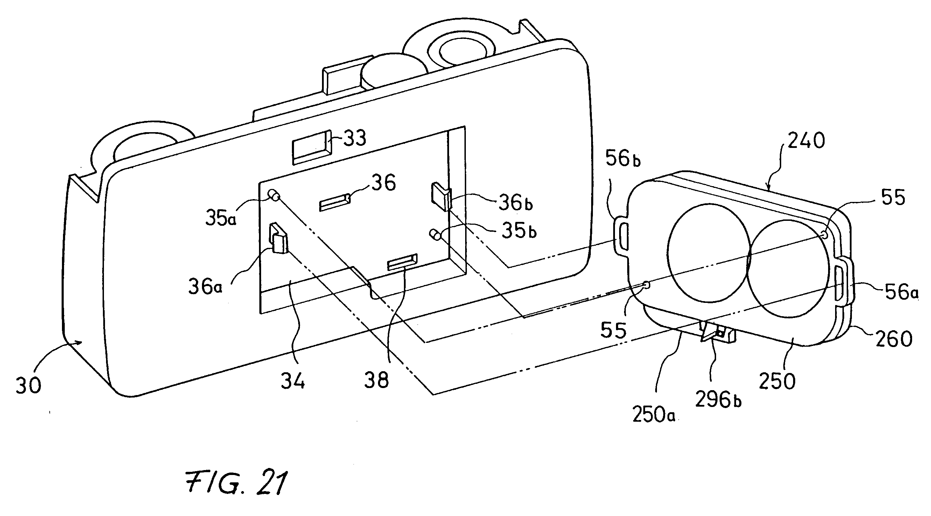

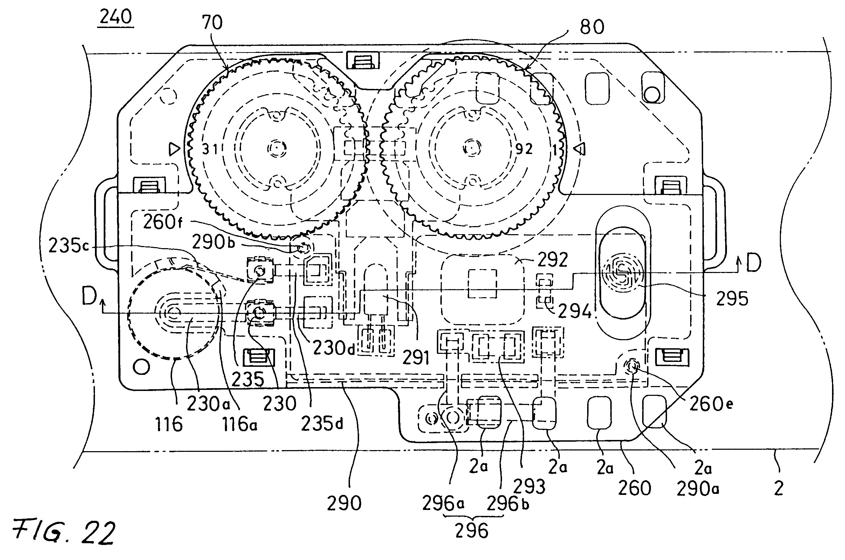

FIG. 21 is an exploded perspective view showing the camera body of a nonremovable-film camera with its front case removed and equipped with the data print unit of the third embodiment of the invention and the data print unit, and FIG. 22 is a plane view showing the same data print unit as seen from the upper frame. In FIGS. 21 and 22, the same components as in the first embodiment are indicated by the same numbers, and their explanation is omitted.

As shown in FIG. 21, a recessed unit holding space 34 is formed in the back case 30 of the camera body. Unlike the first and second embodiments, no groove for leading out wires is formed in the unit holding space 34. This is because there is no switch unit in this embodiment. This unit holding space 34 differs from those in the first and second embodiments with respect to the formation of an insertion hole 38 for the plate spring described later. The built-in optical system, upper frame 260 and lower frame 250 of the data print unit 240 have nearly the same configuration as in the first and second embodiments. The bottom side of the upper frame 260 extends out farther than the lower frame 250, and the V-shaped plate spring member 296b of the switch 296 for detecting film advance described below is mounted on the rear surface of this protruding member 250a. The data print unit 240 is fitted in this unit holding space 34 and secured.

In the internal structure of the data print unit 240, the data indicator wheels 70 and 80, the data plates 75 and 85 and the data selection mechanism have a configuration similar to that of the first embodiment, but the components mounted on the circuit board 290 and the housing structure for the battery 116 are different from those of the first embodiment. The circuit board 290 is sandwiched between the upper frame 260 and the lower frame 250. The battery 116, the tungsten lamp 291 used as a light source, the integrated circuit 292, the capacitor 293, the resistor 294, etc., are mounted on the circuit board 290. Copper foil electrodes and wiring pattern are formed where required on the surface of the circuit board 290. The lamp 291, capacitor 293 and resistor 294 are soldered to the electrodes. The integrated circuit 292 is connected to the circuit board 290 by wire bonding in the case of a bare chip and is soldered in the case of a package IC. The tungsten lamp 291 offers good exposure quality compared to a light-emitting diode since it emits light over the entire wavelength band, but because its brightness fluctuates greatly, the resistance value of the resistor 294 that determines the length of illumination time is ranked, and the illumination time is adjusted by attaching a resistor of a rank corresponding to the brightness of the lamp 291, whereby the amount of light for printing is maintained constant. The dowel holes 290a and 290b are formed in the circuit board 290, and these are positioned on the dowels 260e and 260f on the upper frame and fitted on them.

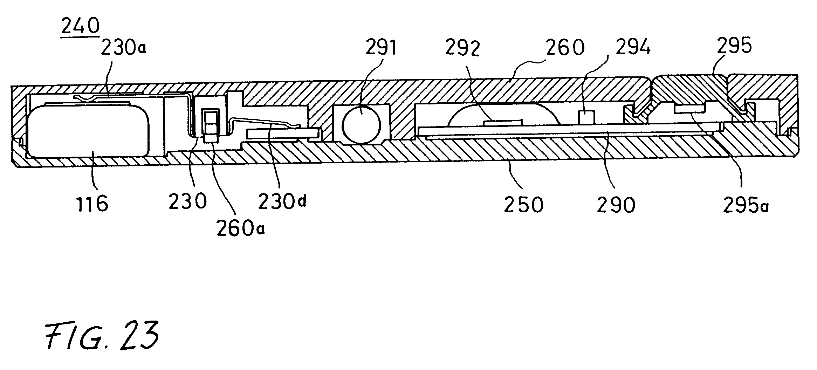

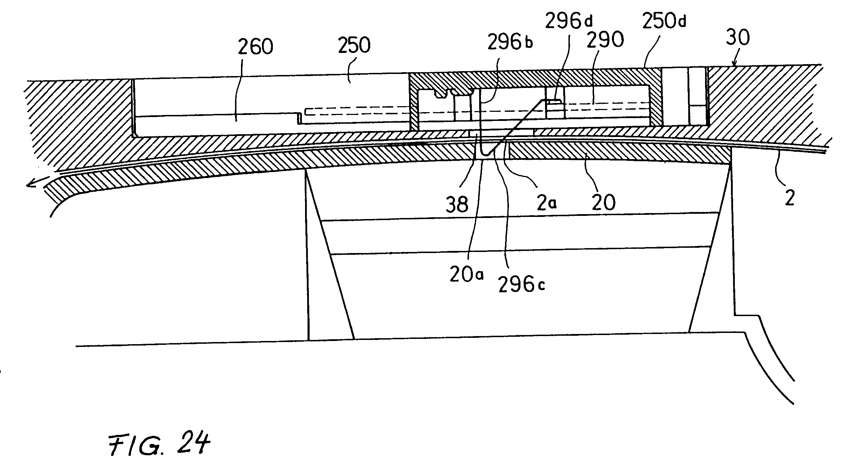

As shown in FIGS. 22 and 23, the push-button switch 295 for lamp illumination is provided on the upper frame 260 of the data print unit 240. The contact 295a of the push-button switch 295 opens and closes the lamp illumination system circuit, described below, of the circuit board 290. The rear surface of the protruding member 250a of the upper frame 260 is provided with a switch 296 for detecting film advance and comprising two plate spring members 296a and 296b as shown in FIGS. 22 and 24. The end of one of the plate spring members 296a is in constant contact with the circuit pattern on the circuit board 290. The other plate spring member 296b has a V-shaped curved member 296c like that shown in FIG. 24, and this curved member 296c falls in the insertion hole 38 in the back case 30 of the camera body and is inserted in the sprocket holes 2a of the photographic film 2 and the hole 20a in the middle case 20. As a result, since the photographic film 2 moves in the direction of the arrow in FIG. 24 in the film advance process of the photographic film 2, the V-shaped curved member 296c repeatedly moves up and down in the perforation holes 2a at the edge of the photographic film 2. This up-and-down motion of the V-shaped curved member 296c causes a repeated contact/noncontact condition between the end 296d and the circuit pattern.

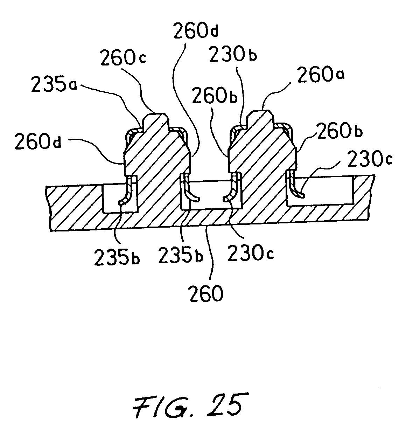

The battery 116 is held in place by the rib 116a formed in the upper frame 260 so that it surrounds the battery 116, the plate spring 230a of the negative electrode plate 230 and the lower frame 250. As shown in FIG. 25, the negative electrode plate 230 has a dowel hole 230b that is positioned on the dowel 260a formed in the upper frame 260, and hooks 230c are formed on both sides of the dowel hole 230b. These hooks 230c engage the protrusions 260b on the upper frame 260. Also, the negative electrode plate 230 has a plate spring 230d that comes into elastic contact with the negative electrode of the circuit board 290. As shown in FIG. 25, the positive electrode plate 235 has a dowel hole 235a that is positioned on the dowel 260c formed in the upper frame, and hooks 235b are formed on both sides of the dowel hole 235c. The hooks 235b engage the protrusion 260d on the upper frame 260. The positive electrode plate 235 has a plate spring member 235c that protrudes out one side and comes in elastic contact with the side surface of the battery as well as a plate spring member 235d that protrudes out the other side and comes in elastic contact with the positive electrode of the circuit board 290. As described above, since in the configuration of the data print device of this embodiment the battery 116 is built into the data print unit 140 and there is no switch unit as there is in the first and second embodiments, the only changes required in the camera body in order to apply the data print unit 240 are a by-pass hole 20a in the middle case 20 and a unit holding space 34 in the back case 30 and no extensive design change in existing structures is required. Also, by mounting the battery 116 in the data print unit 240, data print tests can be performed with only the data print unit 240 as in the second embodiment.

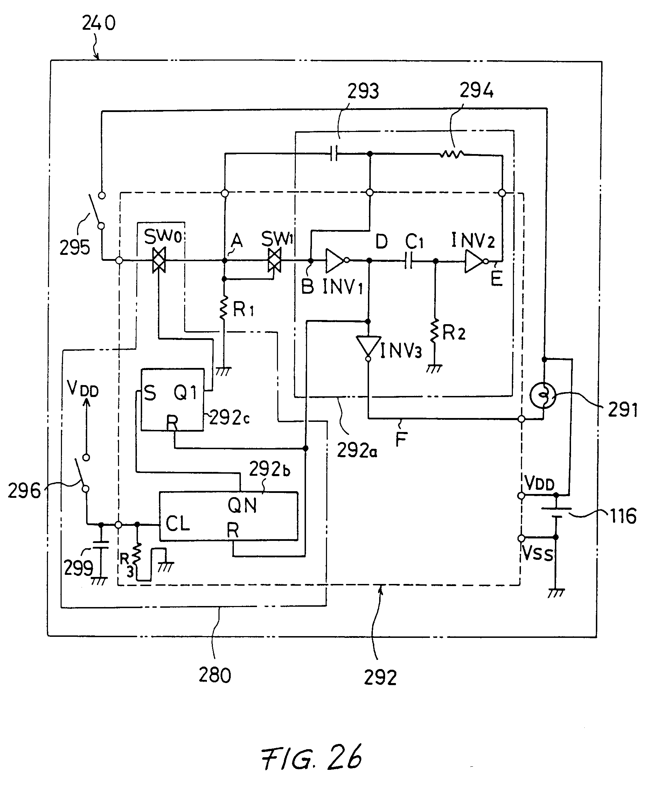

FIG. 26 is an electronic circuit diagram showing the configuration of the illumination circuit and the double illumination prevention circuit of the data print unit of this embodiment. This circuit comprises the push-button switch 295 for illumination, the detection switch 296 for film advance, the integrated circuit 292, the resistor 294 and capacitor 293 externally attached for this integrated circuit 292, the tungsten lamp 291, the battery 116 and the capacitor 299 for preventing chatter. The integrated circuit 292 comprises the monostable multivibrator 292a, the analog switches SW0 and SW1, the pulldown resistors R1 and R3, the counter 292b and the set-reset flip-flop 292c. The monostable multivibrator 292a has the inverters INV1 to INV3, the capacitor C1 and the pulldown resistor R2.

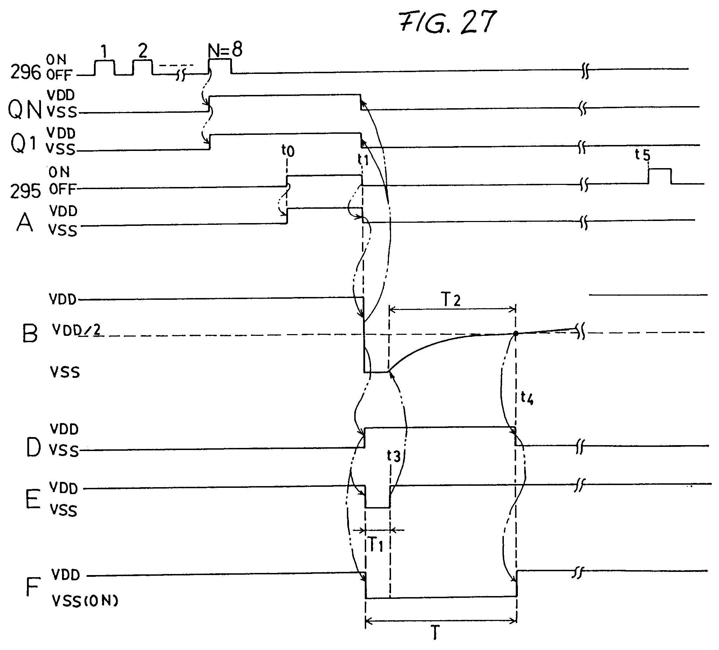

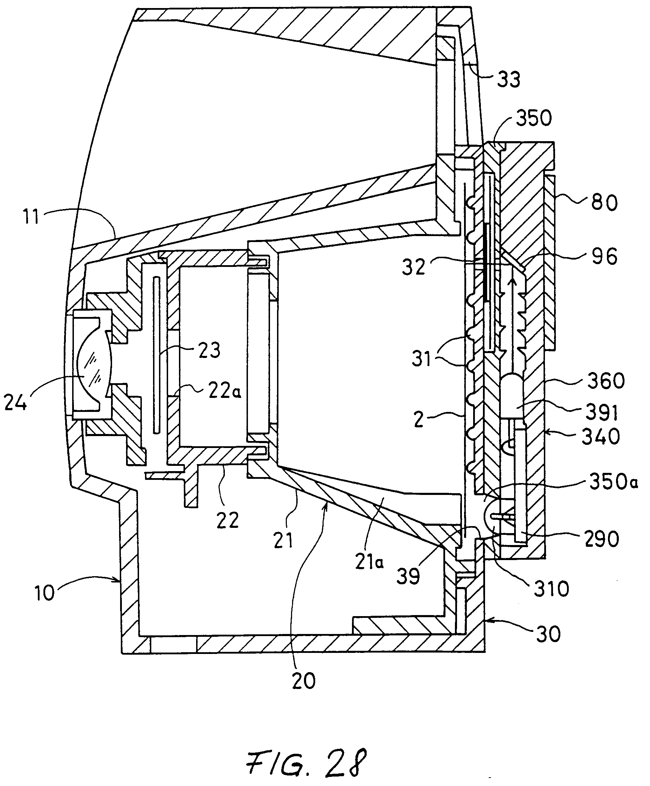

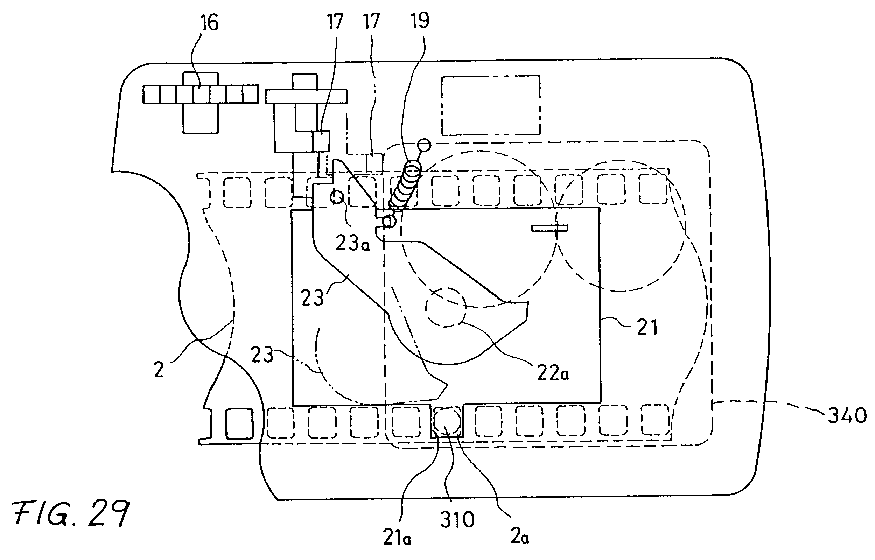

When the photographic film 2 is not advanced and the push-button 296 is open (OFF), point A is pulled down by the resistor R1, and therefore, as shown in FIG. 27, point A is low level (VSS), and also since the input of the inverter INV3 is pulled down by the resistor R2, output E of the inverter INV3 is high level (VDD). Therefore, input B of the inverter INV1 is high level and its output D is low level, and output F of the inverter INV3 is high level. As a result, the externally attached capacitor 293 is charged, while the internal capacitor C1 is discharged. Next, when the film advance knob is turned and the photographic film 2 is advanced when shooting a picture, the V-shaped curved member 296c of the switch 296 for film advance detection repeatedly enters and comes out of the perforation holes 2a resulting in an up-and-down motion, and as shown in FIG. 27 the switch 296 switches ON and OFF after a prescribed number of times. Since there are generally eight perforation holes per frame in 35 mm cameras, eight pulses are impressed on the clock input CL of the counter 292 by one complete film advance operation. When the eighth (generally Nth) pulse rises, the QN output of the counter 292 rises from low level (VSS level) to the high level (VDD level). The rise of this QN output raises the set terminal S of the flip-flop 292c, and therefore, as shown in FIG. 27, the Q1 output changes from low level to high level. This causes the analog switch SW0 to close so that its input is transferred to the output side. When the push-button 295 is manually pressed at time t0, the analog switch SW1 closes, input B of the inverter INV1 remains at high level and both electrodes of the capacitor 293 close, resulting in discharge of its charge. When the push-button 295 is reset to an OFF condition at time t1, input A returns to low level and the analog switch SW1 opens. Here, since input A is dropped to low level, input B of the inverter INV1 is dropped to low level because of the zero potential difference between the two electrodes of the capacitor due to the lack of charge. As a result, output D of the inverter INV1 becomes high level, and since the input of the inverter INV2 becomes high level because of the zero potential difference between the electrodes of the capacitor C1 due to the lack of charge, output E becomes low level. Also, both the counter 292b and the flip-flop 292c are reset. Since the transition of output E to low level causes output F of the inverter INV2 to become low level, the tungsten lamp 291 comes on. However, the capacitor C1 gradually becomes charged, and therefore the input level of the inverter INV2 drops and its output E eventually inverts to high level at time t3. The time period T1 until this inversion is determined by the time constant of the capacitor C1 and the resistor R1. Since the capacitor C1 and resistor R1 are formed as a semiconductor integrated circuit, their time constant is relatively small. When output E of the inverter INV2 becomes high level at time t3, charging of the externally attached capacitor 293 begins. In this charging process, input B of the inverter INV1 rises exponentially as shown in FIG. 27, but when this input B reaches the threshold voltage (generally VDD/2) of the inverter INV2, output D inverts from high level to low level at time t4. The time period T2 up until inversion is determined by the time constant of the resistor 294 and the capacitor 293. As a result, output F of the inverter INV2 becomes high level, thus causing the tungsten lamp 291 to switch off. Therefore, the illumination time of the tungsten lamp 291 is the low level time T (= T1 + T2) of output F, and the illumination time can be kept constant even if there should be some deviation in the ON period of the push-button switch 295. Particularly when the push-button switch 295 is ON, the analog switch SW1 quickly discharges the capacitor 293 instantaneously, and therefore even if the ON period (t1 - t0) is instantaneous depending on how the push-button switch 295 is depressed, the capacitor 123 can be reliably set to a noncharge condition, thus making it possible to reliably drop the voltage of input B to low level VSS and eliminating deviations in the illumination time. This illumination circuit is not linked to the shutter blade of the camera body, but rather the lamp 291 is illuminated by depression of the push-button switch 295. Therefore, it is necessary to provide a double-illumination prevention function. The double-illumination prevention function of this embodiment is achieved with the film advance detection circuit. That is, the film advance detection circuit 280 comprises the switch 296 for film advance detection, the counter 292b, the flip-flop 292c and the analog switch SW0. When no or an incomplete film advance operation is performed, the Q1 output of the flip-flop 292c is in a low level condition because the QN output of the counter 292b is low level. Therefore, since the analog switch SW0 is in an OFF condition, the high level of the input does not reach output A even when the push-button switch 295 is switched ON at time t5. Therefore, double illumination is prevented.

Fourth Embodiment

Next, is an explanation of the fourth embodiment of the invention. This embodiment features a configuration in which the light source of the data print unit is caused to emit light for a prescribed period of time by a photosensor receiving light from the subject when the picture is taken.

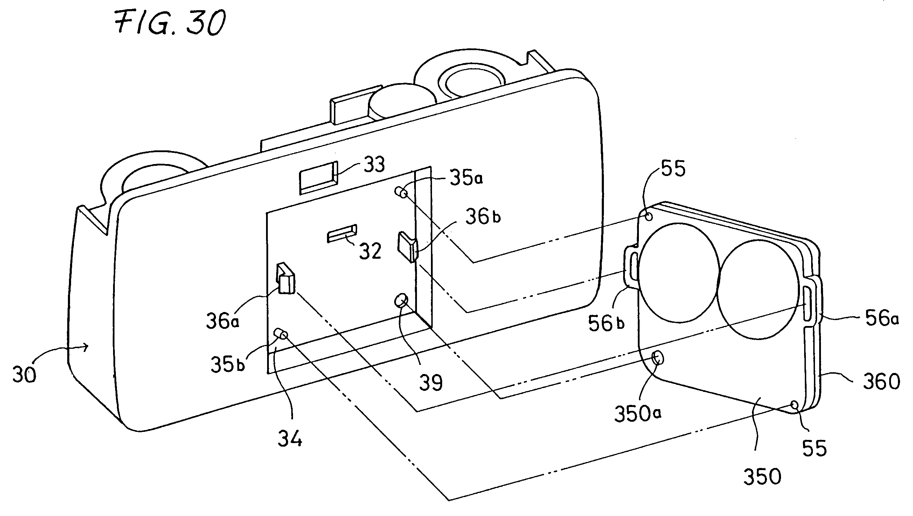

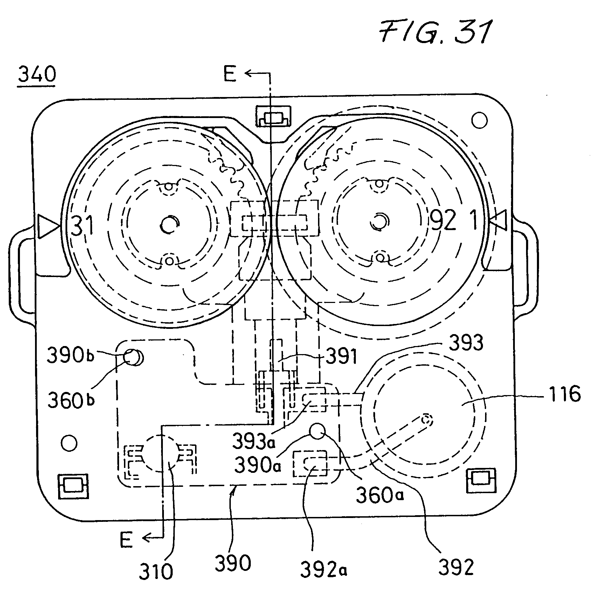

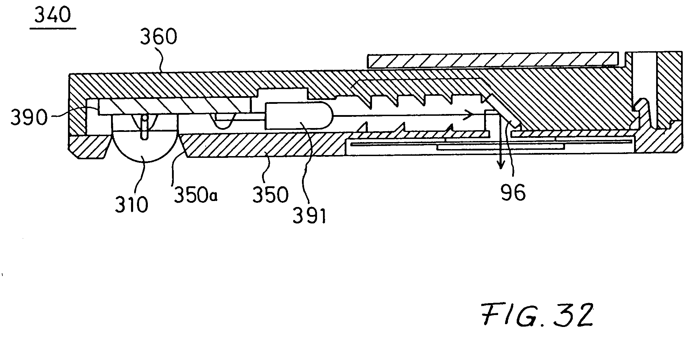

FIG. 28 is a longitudinal sectional side view showing a nonremovable-film camera equipped with the data print unit of the fourth embodiment of the invention, FIG. 29 is front view showing the same nonremovable-film camera, FIG. 30 is an exploded perspective view showing the camera body of the same nonremovable-film camera with its front case removed and the data print unit, FIG. 31 is a plane view showing the same data print unit as seen from the top frame, and FIG.32 is a cut plane view of the same data print unit. The same components in this embodiment as in the first embodiment are designated by the same numbers and their explanation is omitted here.

The light guide cylinder 21 of the middle case 20 in the camera body of this embodiment has a sensor light guide path 21a in its lower part, and in the lower part of the surface of the back case 30 that comes in contact with the film is a transmission hole 39 that leads part of the subject light that passes through the sensor light guide path 21a to the photosensor 310. This transmission hole 39 is positioned so that it lines up with the perforation holes 2a of the film as described below and is formed in the corner of the unit holding space 34. On the lower frame 350 of the data print unit is formed a sensor window 350a disposed opposite the transmission hole 39. As shown in FIG. 29, when the shutter lever 17 is depressed upon completion of manual rotation of the film advance knob 16, the shutter blade is rotated on the axis 23a from the position of the solid line in FIG. 29 to the position of the double-dashed line, the transmission light hole 22a is opened and the subject is exposed on the photographic film 2. At the time of this exposure, part of the subject light passes through the sensor light guide path 21a, the transmission hole 39 and the sensor window 350a and is projected on the light sensor 310.

The internal structure of the data print unit 340 has the same configuration as the first embodiment with respect to the data indicator wheels 70 and 80, the data plates 75 and 85 and the remaining data selection mechanism, but the components mounted on the circuit board 390 and the housing structure for the battery 116 are different from those in the first embodiment. The circuit board 390 is sandwiched between the upper frame 360 and the lower frame 350. The tungsten lamp 391 used as the light source, the photosensor (phototransistor) 310, and electronic components described below are mounted on the circuit board 390. Copper foil electrodes and a circuit pattern are formed where required on the surface of the circuit board 390. The lamp 391, photosensor 310, etc., are soldered to the electrodes. The dowel holes 390a and 390b are formed in the circuit board 390, and these are lined up with the dowels 360a and 360b on the upper frame 360 and engage them. The photosensor 310 mounted on the circuit board 390 faces the sensor window 350a of the lower frame as shown in FIG. 31. The battery 116 is sandwiched between the plate spring type battery presser metal 392 on the positive electrode side and the plate spring type battery presser metal 393 on the negative electrode side. The ends 392a and 393b of the battery presser metals 392 and 393 are in contact with the circuit pattern of the circuit board 390.

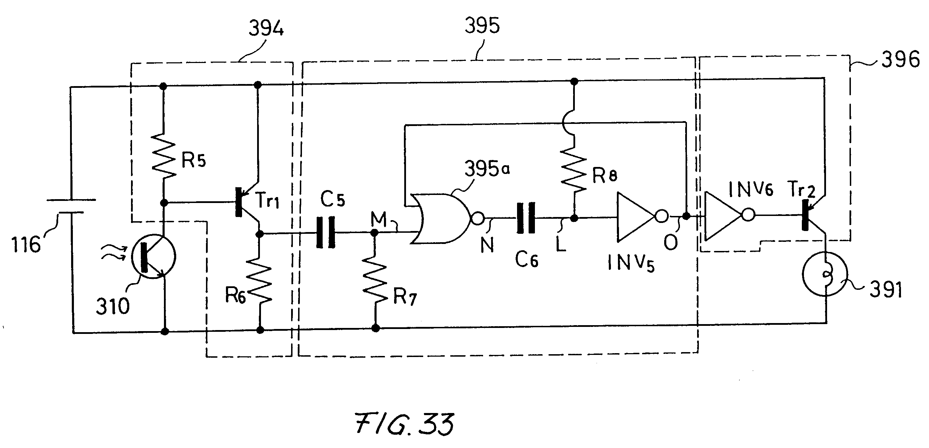

FIG. 33 is an electronic circuit diagram showing the lamp illumination control circuit in the data print unit of this embodiment. This lamp illumination control circuit comprises the photosensor (phototransistor) 310, the battery 116, the light-emitting trigger signal amplification circuit 394, the monostable multivibrator 395, the output circuit 396 and the tungsten lamp 391. The light-emitting trigger signal amplification circuit 394 comprises the load resistor R5 of the photosensor 310, the PNP type transistor Tr1 and the collector resistor R6. The monostable multivibrator 395 comprises the high-pass capacitor C5, the two-input NOR gate 395a, the capacitor C6 for the time constant, the inverter INV5, the pulldown resistor R7 and the pullup resistor R8. Output O of the inverter INV5 is the first input of the NOR gate 395a, and the second input of the NOR gate 395a is pulled down via the resistor R7.

The output circuit 396 comprises the inverter INV6 and the PNP transistor Tr2.

While the photosensor 310 is not receiving light, its output O is low level (VSS level) because input L of the inverter INV5 is made high level (VDD level) via the pullup resistor R8. Therefore, the first input of the NOR gate 395a is also low level, and since the second input M of the NOR gate 395a is made low level by the pulldown resistor R7, the output N of the NOR gate 395a is high level. As a result, the capacitor C6 remains in an uncharged state since both electrodes are high level.

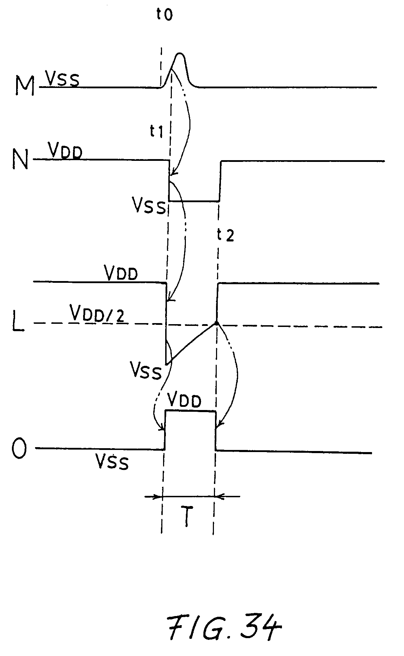

Here, as described above, when the shutter level 17 is depressed and part of the subject light is received by the photosensor 310, the voltage drop in the load resistor R5 causes the transistor Tr1 to come ON and a positive trigger pulse appears at its collector. This trigger pulse passes through the high-pass capacitor C5. A trigger pulse like that shown in FIG. 34 which rises at time t0 is impressed on the second input M of the NOR gate 395a. When the potential of the trigger pulse exceeds the threshold value of the NOR gate 395a at time t1, output N of the NOR gate 395a inverts to low level. This inversion of output N to low level pulls input L of the inverter INV5 down to low level because the capacitor C6 is in a non-charged state. This causes output O of the inverter INV5 to change from low level to high level. Even if the second input M of the NOR gate 395a should return to low level at this time (even if the light receiving period is instantaneous), output N of the NOR gate 395a is maintained at low level and the capacitor C6 continues to be charged because the first input of the NOR gate 395a has become high level. Also, the capacitor C6 is gradually charged by the time constant determined by the capacitor C6 and the pullup resistor R8. When this happens, input L of the inverter INV5 rises exponentially from low level to high level as shown in FIG. 34, but when it reaches the threshold value (generally VDD/2) of the inverter INV5 at time t3, output O of the inverter INV5 inverts from high level to low level. Since this inversion sets output N of the NOR gate 395a to high level, the capacitor C6 is discharged and input L of the inverter INV5 becomes high level. In this way, the generation of the trigger pulse M maintains output O of the inverter INV5 at high level for only the time period T determined by the capacitor C6 and the pullup resistor R8. As a result, lamp 391 illuminates for only the light-emitting time period T. Also, even if there should be deviations in the period during which the trigger pulse M is generated (deviations in the period during which the shutter lever is depressed), light emission is reliably obtained for only time period T once the trigger pulse is generated.

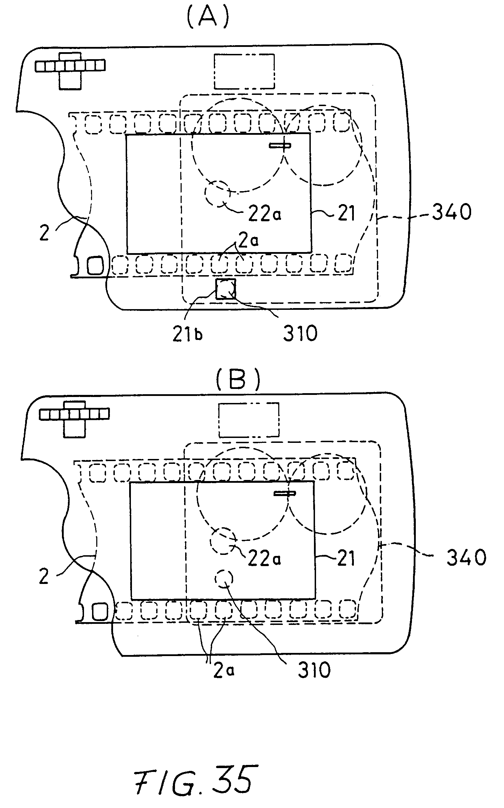

In the above configuration, the sensor light guide path 21a in the lower part of the light guide cylinder 21 is disposed such that it overlaps the perforation holes 2a in the photographic film, but it is sufficient that the position where the sensor light guide path 21a is disposed be where part of the subject light arrives. FIG. 35 is a front view of the nonremovable-film camera of a modification of this embodiment. In the modification shown in FIG. 35 (A), a dedicated sensor light guide path 21b is formed independent of the light guide cylinder 21 of the middle case 20 at a position where it does not overlap the photographic film 2. In the modification shown in FIG. 35 (B), a structure is employed in which the light guide cylinder 21 itself also serves as the sensor light guide path. In this case, the light arriving at the photosensor 310 is light that has passed through the photographic film 2, and therefore the illumination of the light received on the photosensor 310 is inferior to that in the modification in FIG. 35 (A). However, there is no need to change the middle case 20 of the camera body, and only the unit holding space 34 in the back case 30 with a transmission hole need be changed. Since the current consumption of the light source illumination control circuit described above is extremely small when the lamp is not on, it can be operated for long periods on a single battery. Further, since no elements that require high voltage are used, operation is possible with a 1.5-volt power source. Also, since the number of elements is small and no expensive elements are used, the circuit configuration is inexpensive.

In this embodiment, year-month-day date data were used as the print data, but they are not limited to this, and print units with data plates on which the names of scenic spots, places of historical interest and other locations, symbols such as a heart or star or other suitable data are affixed can be realized. Also, it is possible to have the user select the print unit and allow him to easily attach it to the nonremovable-film camera.

Applicability to Industry

As described above, the data print unit of the invention has a simple, low cost, compact configuration in which selection of the datasections on the data plates is limited, and therefore it is suited for use as a data print device for throw-away cameras or one-time-use cameras.

**Claims**

1. A data print unit comprising a light source disposed in the internal space of an assembled unit in which an upper frame and a lower frame are mated, an optical means that projects the light emitted from the light source to the outside via a light transmission hole in the lower frame, a print data plate having multiple translucent or shielding type data sections at positions equidistant from its rotational center, and a data indicator wheel having a flange with data indicator sections corresponding directly or indirectly to the data sections on the print data plate at positions equidistant from its rotational center, wherein the data indicator wheel is positioned on the outside surface of the upper frame and can be rotated with respect to the assembled unit, and the print data plate is positioned on the outside surface of the lower frame such that each data section selectively faces the light transmission hole and is fixed to the data indicator wheel such that it can be removed and attached.

2. The data print unit of claim 1 wherein the data indicator wheel includes an axial member that passes through an axial hole in the assembled unit and the print data plate is fixed to the end of the axial member by means of a flanged pin, etc., such that it can be attached and removed.

3. The data print unit of claim 2 wherein the data indicator wheel has a ratchet gear on the back surface of the flange and the upper frame has a damping member that meshes with the ratchet gear.

4. The data print unit of claim 3 wherein an inclined surface is formed on either the ratchet gear or the damping member such that it moves the upper frame and data indicator wheel to a meshed condition at the same time they are assembled.

5. The data print unit of claim 4 wherein the data indicator wheel has a groove on its inner circumference between the axial member and the ratchet gear and the upper frame has a cylindrical member on the edge of the opening of its axial hole that engages with the groove on the inner circumference.

6. The data print unit of claim 3 or 5 wherein the position where the ratchet gear and the damping member mesh is near the light transmission hole.

7. The data print unit of claims 1 to 6 wherein the print data plate comprises a disk-shaped first print data plate and a disk-shaped second print data plate, and the data indicator wheel comprises a first data indicator wheel corresponding to the first print data plate and a second data indicator wheel corresponding to the second print data plate.

8. The data print unit of claim 7 wherein the first print data plate and the second print data plate are disposed so parts of each overlap and there is a light transmission hole facing the overlapping parts.

9. The data print unit of claim 8 wherein the light transmission holes comprise a first light transmission hole facing the data sections of the first print data plate and a second light transmission hole facing the data sections of the second print data plate and the first light transmission hole and the second light transmission hole are separated by a shielding partition.

10. The data print units of claims 6 to 9 wherein the first print data plate has year-month data and the second print data plate has day data.

11. The data print units of claims 6 to 10 wherein both the first and second print data plates have an opaque nondata section.

12. A nonremovable-film camera including
data print unit comprising a light source disposed in the internal space of an assembled unit in which an upper frame and a lower frame are mated, an optical means that projects the light emitted from the light source to the outside via a light transmission hole in the lower frame, a print data plate having multiple translucent or shielding type data sections at positions equidistant from its rotational center, and a data indicator wheel having a flange with data indicator sections corresponding directly or indirectly to the data sections on the print data plate at positions equidistant from its rotational center, wherein the data indicator wheel is positioned on the outside surface of the upper frame and can be rotated with respect to the assembled unit, and the print data plate is positioned on the outside surface of the lower frame such that each data section selectively faces the light transmission hole and is fixed to the data indicator wheel such that it can be removed and attached,
back case of the camera body to which the data print unit can be attached and having a data light transmission hole formed in it, and
switch unit having a mechanical switching means that is linked to the exposure operation of the shutter blade of the camera body and closes the illumination control circuit for the light source.

13. The nonremovable-film camera of claim 12 wherein the illumination control circuit has a timed feeder circuit that fixes the time power is supplied to the light source by the closure of the mechanical switching means inside the data print unit.

14. The nonremovable-film camera of claim 12 or 13 wherein the data print unit has a built-in battery for supplying power to the light source.

15. A data print unit comprising a light source disposed in the internal space of an assembled unit in which an upper frame and a lower frame are mated, an optical means that projects the light emitted from the light source to the outside via a light transmission hole in the lower frame, a print data plate having multiple translucent or shielding type data sections at positions equidistant from its rotational center, and a data indicator wheel having a flange with data indicator sections corresponding directly or indirectly to the data sections on the print data plate at positions equidistant from its rotational center, wherein the data indicator wheel is positioned on the outside surface of the upper frame and can be rotated with respect to the assembled unit, and the print data plate is positioned on the outside surface of the lower frame such that each data section selectively faces the light transmission hole and is fixed to the data indicator wheel such that it can be removed and attached, wherein

the data print unit has a manual switching means that generates an illumination command signal which controls illumination by the light source, a detection means that detects the completion of film advance and generates a detection signal, a means that stores the completed or noncompleted condition of film advance by means of the detection signal, a timed feeder circuit that fixes the time power is supplied to the light

source from the built-in battery at the time the detection signal is generated at the completion of film advance, and a double-illumination prevention circuit that prohibits the supply of power to the light source when film advance is in a noncompleted condition.

16. The data print unit of claim 15 wherein the detection means is a mechanical switch means that is opened and closed by a spring member that moves up and down as it enters the perforation holes while the photographic film is being advanced.

17. A nonremovable-film camera having the data print unit stipulated in claim 15 or 16 and a back case of the camera body to which the data print unit can be attached and in which a data light transmission hole is formed.

18. A data print unit comprising a light source disposed in the internal space of an assembled unit in which an upper frame and a lower frame are mated, an optical means that projects the light emitted from the light source to the outside via a light transmission hole in the lower frame, a print data plate having multiple translucent or shielding type data sections at positions equidistant from its rotational center, and a data indicator wheel having a flange with data indicator sections corresponding directly or indirectly to the data sections on the print data plate at positions equidistant from its rotational center, wherein the data indicator wheel is positioned on the outside surface of the upper frame and can be rotated with respect to the assembled unit, and the print data plate is positioned on the outside surface of the lower frame such that each data section selectively faces the light transmission hole and is fixed to the data indicator wheel such that it can be removed and attached, wherein

the data print unit has a photosensor that faces the sensing light transmission member of the lower frame and a timed feeder circuit that fixes the time power is supplied to the light source from the built-in battery at the time the light detection signal is generated by the sensor.

19. A nonremovable-film camera having the data print unit stipulated in claim 18 and a camera body to which the data print unit can be attached and in which a data light transmission hole and a light path that guides part of the projected light to the sensor are formed.

20. The nonremovable-film camera of claim 19 wherein the light path is a projected light path formed by utilizing the perforation holes in the photographic film.

21. The nonremovable-film camera of claim 19 wherein the light path is a transmission light hole positioned within the angle of view of the photographic film and is formed in the back case of the camera body.

22. The nonremovable-film camera of claim 19 wherein the light path is a dedicated light path formed outside the area occupied by the photographic film.

100

FIG. 1

FIG. 2

EP 0 537 362 A1

FIG. 3

FIG. 4

FIG. 5

40

56a

56b

60

B

A

68a

68b

81

88

88a

92 1

80

85

67c

81c

83

83b

66d

66e

65d

67c

65e

73

73b

53b

71c

78

78a

31

71

71c

93

75

70

61a

67c

61b

95a

90

91

64ab

64cb

64eb

53a

64ac

64cc

64ec

96

95b

94

111a

111b

FIG. 6

FIG. 7

FIG. 8

FIG. 9

(A)

60

65d, 66d

73, 83

65e, 66e

65, 66

71, 81

73b, 83b

65c, 66c

(B)

73b, 83b

72, 82    65f, 66f    65, 66    70, 80

65c, 66c    65e, 66e    71, 81

FIG. 10

FIG. 11

EP 0 537 362 A1

FIG. 12

FIG. 13

EP 0 537 362 A1

図 14

111b

113

112

91

116

94

110

111a

90

FIG. 14

FIG. 15

FIG. 16

_FIG. 17_

FIG. 18

FIG. 19

FIG. 20

FIG. 21

FIG. 22

EP 0 537 362 A1

*FIG. 23*

EP 0 537 362 A1

FIG. 24

*FIG. 25*

FIG. 26

FIG. 27

FIG. 28

FIG. 29

FIG. 30

EP 0 537 362 A1

FIG. 31

FIG.32

FIG.33

FIG. 34

(A)

(B)

FIG. 35

図 36

FIG.36

EP 0 537 362 A1

# INTERNATIONAL SEARCH REPORT

International Application No PCT/JP92/00419

## I. CLASSIFICATION OF SUBJECT MATTER (if several classification symbols apply, indicate all) 6

According to International Patent Classification (IPC) or to both National Classification and IPC

Int. Cl$^5$  G03B17/24

## II. FIELDS SEARCHED

### Minimum Documentation Searched 7

| Classification System | Classification Symbols |
|---|---|
| IPC | G03B17/24, G03B17/02 |

### Documentation Searched other than Minimum Documentation to the Extent that such Documents are Included in the Fields Searched 8

| | |
|---|---|
| Jitsuyo Shinan Koho | 1940 - 1991 |
| Kokai Jitsuyo Shinan Koho | 1972 - 1990 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 53-33617 (Canon Inc.), March 29, 1978 (29. 03. 78), (Family: none) | 1-22 |
| A | JP, A, 54-51524 (Ricoh Co., Ltd.), April 23, 1979 (23. 04. 79), (Family: none) | 1-22 |
| A | JP, A, 54-13324 (Olympus Optical Co., Ltd.), January 31, 1979 (31. 01. 79), (Family: none) | 1-22 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| June 22, 1992 (22. 06. 92) | July 7, 1992 (07. 07. 92) |

| International Searching Authority | Signature of Authorized Officer |
|---|---|
| Japanese Patent Office | |

Form PCT/ISA/210 (second sheet) (January 1985)